# EUROPÄISCHE PATENTANMELDUNG

(11) **EP 4 742 471 A1**
(43) Veröffentlichungstag der Anmeldung: **13.05.2026**
(21) Anmeldenummer: 24212506.0
(22) Anmeldetag: 12.11.2024
(51) Int. Cl.: H02G 3/12, H02G 3/38

(54) **ELEKTRODOSE, FIXIERELEMENT, VORRICHTUNG, WERKZEUG, HANDHABUNGSROBOTER UND VERFAHREN ZUM ZUSAMMENBAUEN EINER VORRICHTUNG**

(71) Anmelder: Gropyus AG, 1030 Wien (AT)
(72) Erfinder: MANHARTSEDER, Christian, 4691 Schlatt (AT); STRASSMAIR, Michael, 4653 Eberstalzell (AT); HAGLER, Reinhard, 4300 St. Valentin (AT); HÖTZINGER, Helmut, 4641 Steinhaus bei Wels (AT)
(74) Vertreter: Vossius & Partner Patentanwälte Rechtsanwälte mbB

(57) **Zusammenfassung**

Die Erfindung betrifft eine Elektrodose (30), die dazu eingerichtet ist, an einem Panel (31) befestigt zu werden. Das Panel (31) ist dazu eingerichtet, als Teil einer Wand (32) und/oder einer Decke (32) eines Raums (37) eines Gebäudes montiert zu werden. Das Panel (31) weist eine Innenseite (33), die dem Raum (37) zugewandt ist, und eine Außenseite (34), die von dem Raum (37) abgewandt ist, bezogen auf einen montierten Zustand des Panels (31), auf. Die Elektrodose (30) weist mindestens eine Befestigungsvorrichtung (38) auf, die dazu eingerichtet ist, die Elektrodose (30) an der Außenseite (34) des Panels (31) zu befestigen. Die Elektrodose (30) weist mindestens eine Greifschnittstelle (52) auf, die dazu eingerichtet ist, durch mindestens einen Handhabungsroboter (53) in Eingriffsverbindung zu gelangen, um die Elektrodose (30) mittels des Handhabungsroboters (53) an dem Panel (31) zu positionieren.

Die Erfindung betrifft außerdem ein Fixierelement (70), das dazu eingerichtet ist, mindestens eine elektrische Leitung (72) an einem Panel (31) zu fixieren, eine Vorrichtung (100), ein Werkzeug und ein Verfahren zum Zusammenbauen einer Vorrichtung (100).

## Beschreibung

Im Gebäudebau werden in der Regel relativ viele Elektroinstallationen, beispielsweise Elektroleitungen, Steckdosen etc., durchgeführt. Im heutigen technischen Entwicklungszustand erfolgen die jeweiligen Elektroinstallationen in der Regel manuell bzw. händisch, in der Regel vor Ort am jeweiligen Gebäude, beispielsweise an einer Baustelle.

Derartige manuelle Prozesse erfordern jedoch qualifizierte und/oder relativ kostenintensive Arbeitskräfte.

Dies führt außerdem zu einem erheblichen Produktionsaufwand und einer relativ geringen Effizienz. Dadurch werden relativ hohe Kosten verursacht.

Des Weiteren sind manuell durchgeführte Montagevorgänge häufig fehleranfällig und/oder weisen häufig eine relativ geringe Montagegenauigkeit bzw. relativ große Abweichungen auf.

Es ist deshalb wünschenswert, zumindest einen Nachteil aus dem Stand der Technik, vorzugsweise zumindest einen der oben genannten Nachteile, zumindest teilweise zu verbessern.

Es ist deshalb eine Aufgabe der vorliegenden Erfindung, Elektroinstallationen zu verbessern, insbesondere durch eine Steigerung der Effizienz und/oder eine Steigerung der Genauigkeit und/oder eine Erleichterung beim Montieren der Elektroinstallationen.

Diese Aufgabe wird durch eine Elektrodose gemäß den Merkmalen des Anspruchs 1 gelöst. Vorteilhafte Ausgestaltungen mit zweckmäßigen Weiterbildungen der Erfindung sind in den jeweiligen Unteransprüchen sowie in der nachfolgenden Beschreibung angegeben.

Die Elektrodose kann dazu eingerichtet sein, an einem Panel befestigt zu werden. Das Panel kann dazu eingerichtet sein, als Teil einer Wand und/oder einer Decke, insbesondere einer Hohlwand und/oder einer Hohldecke, eines Raums eines Gebäudes montiert zu werden. Das Panel kann, als Teil der Wand und/oder der Decke des Raums, den Raum zumindest bereichsweise begrenzen. Das Panel kann zumindest teilweise in und/oder an einer Öffnung, die in der Wand und/oder der Decke definiert ist, angeordnet sein und/oder die Öffnung zumindest teilweise verschließen und/oder das Panel kann sich zumindest teilweise über die Öffnung erstrecken. Das Panel kann formschlüssig und/oder kraftschlüssig und/oder stoffschlüssig mit der Wand und/oder der Decke, insbesondere mit einem Abschnitt der Wand und/oder der Decke, der dem Panel im montierten Zustand benachbart angeordnet ist, befestigt sein, beispielsweise mittels Schrauben, Klebstoff, Clips, Klammern, Steckverbindungen, etc. Im montierten Zustand des Panels kann das Panel im Wesentlichen als Teil der Wand und/oder der Decke eines Raums dienen.

Ein Raum eines Gebäudes, im Sinne der vorliegenden Offenbarung, kann als Raum eines Gebäudes, in dem sich Menschen üblicherweise aufhalten bzw. aufhalten können, beispielsweise ein Wohnzimmer, ein Schlafzimmer, etc., verstanden werden.

Die Wand des Gebäudes kann als Hohlwand ausgebildet sein. Mit anderen Worten kann die Wand mindestens einen Hohlraum aufweisen, die zumindest teilweise das Panel und/oder die Elektrodose aufnehmen kann. Die Decke des Gebäudes kann als Hohldecke ausgebildet sein. Mit anderen Worten kann die Decke mindestens einen Hohlraum aufweisen, die zumindest teilweise das Panel und/oder die Elektrodose aufnehmen kann.

Das Panel kann eine Innenseite, die dem Raum zugewandt ist, und eine Außenseite, die von dem Raum abgewandt ist, aufweisen, jeweils bezogen auf einen montierten Zustand des Panels. Die Elektrodose kann mindestens eine Befestigungsvorrichtung aufweisen. Die Befestigungsvorrichtung kann dazu eingerichtet sein, die Elektrodose an der Außenseite des Panels zu befestigen. Mit anderen Worten kann die Elektrodose rückseitig an dem Panel montiert werden, bezogen auf einen montierten Zustand des Panels.

Die Elektrodose kann mindestens eine Greifschnittstelle aufweisen. Die Greifschnittstelle kann dazu eingerichtet sein, durch mindestens einen Handhabungsroboter in Eingriffsverbindung zu gelangen, um die Elektrodose mittels des Handhabungsroboters an dem Panel zu positionieren.

Im Stand der Technik werden Elektroinstallationen, beispielsweise Elektrodosen, in der Regel manuell, in der Regel vor Ort am jeweiligen Gebäude, beispielsweise an einer Baustelle, durchgeführt, wie eingangs beschrieben. Im Gegensatz zum Stand der Technik ermöglicht die hierin beschriebene Elektrodose eine roboterunterstützte, vorzugsweise vollautomatisierte, Montage der Elektrodose. Dadurch kann die Elektrodose relativ schnell und/oder zeiteffizient installiert werden, im Vergleich zur manuellen Montage von Elektrodosen im Stand der Technik.

Dadurch kann die Elektrodose an dem Panel vormontiert werden, insbesondere in größeren Stückzahlen, beispielsweise in einer Fertigungshalle, anstatt direkt am jeweiligen Endmontageort, beispielsweise an einer Baustelle. Das Panel, mit der daran befestigten, d.h. vormontierten, Elektrodose, kann dann als Teil einer Wand und/oder einer Decke eines Raums des jeweiligen Gebäudes montiert werden. Dadurch kann der Montageprozess zum Montieren der Elektrodose relativ effizient gestaltet werden, beispielsweise in einer Fertigungslinie. Dadurch können die Stückzahlen der montierten Paneele erhöht werden, insbesondere im Vergleich zur manuellen Montage.

Außerdem kann die hierin beschriebene Elektrodose dadurch präziser, d.h. mit geringeren Abweichungen gegenüber einer Sollposition, an dem Panel bzw. an dem jeweiligen Gebäude montiert werden, im Vergleich zur manuellen Montage. Dadurch können beispielsweise Montagefehler vermieden oder zumindest reduziert werden. Außerdem kann dadurch allgemein eine höhere Montagequalität erreicht werden.

Die Elektrodose kann mindestens einen Aufnahmeraum, beispielsweise mindestens ein Fach oder Gehäuse, zum Aufnehmen von Elektrokomponenten und/oder Medienkomponenten, beispielsweise Medieninstallationen, aufweisen.

Die Elektrodose kann mindestens ein Kabel und/oder mindestens einen Stecker und/oder mindestens einen Schalter aufnehmen.

Die Befestigungsvorrichtung kann dazu eingerichtet sein, die Elektrodose mittels mindestens eines Verbindungselements, beispielsweise mittels eines Nagels, einer Schraube, einer Klammer, Klebstoff, etc., an der Außenseite des Panels zu befestigen. Das Verbindungselement kann Teil der Befestigungsvorrichtung sein. Beispielsweise kann das Verbindungselement dauerhaft und/oder integral mit der Befestigungsvorrichtung verbunden sein. Alternativ kann das Verbindungselement eine zusätzliche Komponente sein, die beispielsweise bei der Montage mit der Befestigungsvorrichtung und dem Panel verbunden wird, um die Elektrodose an der Außenseite des Panels zu befestigen.

Durch die oben beschriebene Befestigung der Elektrodose an der Außenseite des Panels, d.h. an einer im Raum nicht sichtbaren Seite des Panels, mittels der Befestigungsvorrichtung kann die Befestigungsvorrichtung verdeckt hinter dem Panel bzw. hinter der Wand und/oder hinter der Decke des Raums angeordnet werden. Im Gegensatz hierzu werden im Stand der Technik die jeweiligen Befestigungsvorrichtungen zum Befestigen der jeweiligen Elektrodosen üblicherweise an der im Raum sichtbaren Innenseite der Wand bzw. Decke befestigt. Mit anderen Worten ermöglicht die hierin beschriebene Elektrodose eine rückseitige Montage der Elektrodose an dem Panel, wohingegen im Stand der Technik in der Regel eine frontseitige Montage an der jeweiligen Wand vorgesehen ist. Eine Montage der Elektrodosen an einer Innenseite der jeweiligen Wand bzw. Decke ist im Stand der Technik in der Regel erforderlich, da die Elektrodosen in der Regel an einer bereits stehenden Wand bzw. einer montierten Decke montiert werden, da bei der im Stand der Technik vorgesehenen Montage der Elektrodosen eine Außenseite der jeweiligen Wand bzw. Decke in der Regel nicht zugänglich ist.

Demnach kann durch die vorliegende Elektrodose die Ästhetik der Montage erhöht werden und/oder entsprechende Maßnahmen, beispielsweise das Vorsehen von Blenden, zum Verdecken der Befestigungsvorrichtung reduziert werden. Außerdem kann dadurch eine größere Gestaltungsfreiheit bei der Konstruktion und/oder der Konfiguration der Befestigungsvorrichtung ermöglicht werden. Beispielsweise kann die Befestigungsvorrichtung größer gebaut werden, da die Befestigungsvorrichtung ohnehin hinter dem Panel bzw. hinter der Wand und/oder hinter der Decke angeordnet werden kann. Im Stand der Technik ist man hingegen in der Regel bestrebt, die jeweilige Befestigungsvorrichtung möglichst kompakt zu gestalten, um die äußere Sichtbarkeit der Befestigungsvorrichtung zu reduzieren bzw. um ein Verdecken der Befestigungsvorrichtung zu erleichtern.

Die Greifschnittstelle kann eine eigens zum Greifen durch den Handhabungsroboter eingerichteten bzw. gestalteten Greifschnittstelle sein. Im Gegensatz hierzu sind herkömmliche Elektrodosen nicht für eine Roboterhandhabung ausgestattet bzw. geeignet. Beispielsweise kann die Greifschnittstelle der hierin beschriebenen Elektrodose eine Gestaltung aufweisen, die an eine Gestaltung und/oder mindestens eine Eigenschaft, beispielsweise an mindestens eine Größe und/oder Geometrie, eines Greifers des Handhabungsroboters angepasst wurde und/oder abgestimmt ist. Beispielsweise kann die Greifschnittstelle mindestens zwei Greifstellen aufweisen, die dazu eingerichtet sind, durch den Handhabungsroboter gegriffen zu werden. Beispielsweise können die Greifstellen derart voneinander beabstandet sein und/oder derart geformt sein, dass sie durch den Handhabungsroboter gegriffen werden können, so dass die Elektrodose durch den Handhabungsroboter bewegt und positioniert werden kann. Alternativ kann die Greifschnittstelle auch nur eine Greifstelle aufweisen, die eine Gestaltung, beispielsweise eine Form und/oder eine Größe, aufweist, die es ermöglicht, mit dem Handhabungsroboter in Eingriffsverbindung zu gelangen bzw. durch den Handhabungsroboter gegriffen zu werden. Die Greifschnittstelle kann eine im Wesentlichen ebene Fläche sein und/oder eine Fläche sein, die eine geringere Krümmung als benachbarte Bereiche der Elektrodose aufweist. Alternativ, oder zusätzlich, kann die Greifschnittstelle eine zum Greifen durch den Handhabungsroboter geeignete Oberflächenrauigkeit aufweisen. Alternativ, oder zusätzlich, kann die Greifschnittstelle eine zum Greifen durch den Handhabungsroboter geeignete Steifigkeit und/oder Festigkeit und/oder Härte aufweisen, beispielsweise so dass die Elektrodose durch das Greifen mittels des Handhabungsroboters nicht beschädigt wird. Alternativ, oder zusätzlich, kann die Greifschnittstelle ein Material aufweisen oder aus einem Material hergestellt sein, welches sich von einem Material eines oder mehrerer benachbarter Abschnitte der Elektrodose unterscheidet, insbesondere um eine Eignung der Greifschnittstelle, durch den Handhabungsroboter gegriffen zu werden, zu verbessern.

Die Greifschnittstelle kann mindestens ein Kennzeichnungsmerkmal aufweisen, welches die Greifschnittstelle für einen Nutzer und/oder für den Handhabungsroboter als Greifschnittstelle kenntlich macht und/oder welches sich von mindestens einem benachbarten Abschnitt der Elektrodose unterscheidet. Dadurch kann die Greifschnittstelle leichter erfasst und/oder erkannt werden, insbesondere durch den Nutzer und/oder den Handhabungsroboter. Dadurch kann ein Greifen der Elektrodose an der Greifschnittstelle durch den Handhabungsroboter erleichtert werden, insbesondere durch eine verwechslungsfreie Erfassung der Greifschnittstelle durch den Nutzer und/oder den Handhabungsroboter. Außerdem kann dadurch eine korrekte Orientierung der Elektrodose bei der Montage sichergestellt werden, beispielsweise um fehlerhafte Montagen, beispielsweise fehlerhafte Orientierungen der Elektrodose beim Einbau, zu verhindern. Das Kennzeichnungsmerkmal kann beispielsweise eine Markierung, beispielsweise eine optische Markierung und/oder eine elektronische Markierung (beispielsweise ein RFID-Tag), sein und/oder aufweisen.

Vorzugsweise weist die Elektrodose mindestens ein Anschlusselement auf. Das Anschlusselement kann dazu eingerichtet sein, mit mindestens einer elektrischen Leitung verbunden zu werden, um die Elektrodose mit der elektrischen Leitung zu verbinden. Mit anderen Worten: Das Anschlusselement kann dazu dienen, die Elektrodose mit der elektrischen Leitung zu koppeln. Das Anschlusselement kann zwischen der Elektrodose und der elektrischen Leitung angeordnet sein, wenn die Elektrodose mit der elektrischen Leitung verbunden ist. Das Anschlusselement kann mindestens eine Aussparung aufweisen, die dazu eingerichtet sein kann, zumindest einen Abschnitt eines Handhabungsroboters, der vorzugsweise die elektrische Leitung greift, zumindest teilweise aufzunehmen und/oder zumindest einen Abschnitt eines Handhabungsroboters, der vorzugsweise die elektrische Leitung greift, durch die Aussparung passieren zu lassen, um die elektrische Leitung mittels des Handhabungsroboters mit dem Anschlusselement zu verbinden. Dadurch kann eine Handhabung bzw. ein Greifen der elektrischen Leitung durch den Handhabungsroboter erleichtert bzw. verbessert werden. Insbesondere kann dadurch die elektrische Leitung durch den Handhabungsroboter an Greifstellen der elektrischen Leitung greifen, die beim Verbinden der elektrischen Leitung mit der Elektrodose bzw. dem Anschlusselement entlang der Aussparung in das Anschlusselement eintauchen, wodurch die elektrische Leitung beim Verbinden mit dem Anschlusselement durch den Handhabungsroboter besser geführt und/oder positioniert werden kann. Die Aussparung ist vorzugsweise länglich und/oder U-förmig. Die Aussparung erstreckt sich vorzugsweise entlang einer Länge, die sich vorzugsweise entlang einer Längsachse des Anschlusselements und/oder der elektrischen Leitung erstreckt, von mindestens 2,5 cm, vorzugsweise mindestens 5 cm, vorzugsweise mindestens 7,5 cm.

Vorzugsweise weist das Anschlusselement mindestens zwei Aussparungen auf. Die Aussparungen können an gegenüberliegenden Seiten des Anschlusselements angeordnet sein. Dadurch kann die elektrische Leitung durch den Handhabungsroboter an gegenüberliegenden Greifstellen der elektrischen Leitung gegriffen werden, die beim Verbinden der elektrischen Leitung mit der Elektrodose bzw. dem Anschlusselement entlang der Aussparung in das Anschlusselement eintauchen, wodurch die elektrische Leitung beim Verbinden mit dem Anschlusselement durch den Handhabungsroboter besser geführt und/oder positioniert werden.

Die Elektrodose kann dazu eingerichtet sein, durch einen einzigen Handhabungsroboter gegriffen zu sein und an dem Panel befestigt zu werden. Dadurch kann der Montagevorgang effizienter gestaltet werden. Alternativ können mehrere Handhabungsroboter vorgesehen sein, wobei zumindest ein erster Handhabungsroboter die Elektrodose greifen kann und zumindest ein zweiter Handhabungsroboter die Elektrodose an dem Panel befestigen kann.

Vorzugsweise erstreckt sich das Anschlusselement, insbesondere eine Längsachse des Anschlusselements, zumindest bereichsweise entlang der Außenseite des Panels und/oder im Wesentlichen parallel zur Außenseite des Panels. Dadurch kann eine relativ kompakte Anordnung der Elektrodose bzw. des Anschlusselements und/oder eine platzsparende Positionierung der elektrischen Leitung erreicht werden. Insbesondere kann dadurch ein Raum bzw. ein Abstand, der sich von der Außenseite des Panels erstreckt, insbesondere im Wesentlichen senkrecht von der Außenseite des Panels, um die Elektrodose, insbesondere das Anschlusselement, unterzubringen bzw. zu verstauen, verkleinert werden.

Alternativ, oder zusätzlich, kann das Anschlusselement dazu eingerichtet sein, dass die elektrische Leitung entlang einer Richtung, die sich entlang der Außenseite des Panels und/oder im Wesentlichen parallel zur Außenseite des Panels erstreckt, mit dem Anschlusselement verbunden wird. Dadurch kann eine relativ kompakte Anordnung der Elektrodose bzw. des Anschlusselements und/oder eine platzsparende Positionierung der elektrischen Leitung erreicht werden. Insbesondere kann dadurch ein Raum bzw. ein Abstand, der sich von der Außenseite des Panels erstreckt, insbesondere im Wesentlichen senkrecht von der Außenseite des Panels, um die Elektrodose, insbesondere das Anschlusselement, unterzubringen bzw. zu verstauen, verkleinert werden.

Vorzugsweise weist die Elektrodose mindestens einen Anschlag auf. Der Anschlag kann dazu eingerichtet sein, zumindest bereichsweise an der Außenseite des Panels anzuliegen, um ein Einschieben der Elektrodose in eine Öffnung des Panels zu begrenzen. Dadurch kann eine Position der Elektrodose relativ zum Panel vordefiniert und/oder begrenzt werden. Dadurch können Toleranzen, im Hinblick auf die Position der Elektrodose am Panel, beim Montieren der Elektrodose am Panel reduziert werden. Außerdem kann dadurch eine roboterunterstützte Montage der Elektrodose durch den Handhabungsroboter weiter verbessert bzw. erleichtert werden, beispielsweise um dadurch einen Verfahrweg des Handhabungsroboters beim Montieren der Steckdose an dem Panel zu begrenzen.

Vorzugsweise weist die Elektrodose mindestens zwei Befestigungsvorrichtungen auf, die zur Befestigung der Elektrodose an der Außenseite des Panels eingerichtet sind. Die Befestigungsvorrichtungen können an gegenüberliegenden Seiten der Elektrodose angeordnet sein.

Vorzugsweise weist die Elektrodose mindestens einen Hauptkörper auf. Die Befestigungsvorrichtung kann jeweils als Lasche, Nase oder Flügel ausgebildet sein. Die Laschen (bzw. Nasen oder Flügel) können sich jeweils von dem Hauptkörper weg erstrecken, vorzugsweise seitlich weg erstreckt, vorzugsweise um mindestens 2 cm, vorzugsweise um mindestens 3 cm, vorzugsweise um mindestens 4 cm, vorzugsweise um mindestens 5 cm, vorzugsweise um mindestens 6 cm, vorzugsweise um mindestens 7 cm. Die Laschen können als Flügel ausgebildet sein. Im Hauptkörper können mehrere Komponenten untergebracht sein. Beispielsweise können im Hauptkörper mehrere elektrische Kontaktelemente angeordnet sein.

Vorzugsweise weist die Elektrodose mindestens einen Kontakt, vorzugsweise mehrere Kontakte, zum Anschließen mindestens eines Kabels, vorzugsweise mehrere Kabel gleichzeitig, an der Innenseite des Panels auf, wenn das Panel in einem montierten Zustand ist und die Elektrodose an dem Panel befestigt ist. Die Elektrodose kann zusätzlich mindestens einen Anschluss zum Anschließen mindestens eines Smartgeräts aufweisen. Die Elektrodose kann den Anschluss und/oder das Smartgerät aufweisen. Das Smartgerät kann ein Smart-Home-System oder mindestens eine Komponente eines Smart-Home-Systems sein.

Vorzugsweise weist die Elektrodose zusätzlich mindestens ein Gehäuse auf. Das Gehäuse kann dazu eingerichtet sein, mindestens eine Komponente, vorzugsweise mindestens das Smartgerät, zumindest teilweise aufzunehmen. Vorzugsweise ist die Elektrodose derart eingerichtet, dass das Gehäuse zumindest teilweise, vorzugsweise vollständig, an der Außenseite, d.h. hinter dem Panel, angeordnet ist. Dadurch kann das Gehäuse und die darin aufgenommenen Komponenten, aus einer Perspektive im Raum des Gebäudes, hinter dem Panel verstaut werden, wodurch eine relativ aufgeräumte und ästhetisch ansprechende Anordnung bereitgestellt werden kann.

Vorzugsweise ist die Elektrodose, vorzugsweise einschließlich des Smartgeräts, als kohärente Einheit eingerichtet. Dadurch kann die Elektrodose, vorzugsweise einschließlich des Smartgeräts, als zusammenhängende Einheit transportiert und montiert werden. Dadurch kann die Handhabung und/oder Montage der Elektrodose erleichtert werden.

Die Eingangs genannte Aufgabe wird außerdem durch ein Fixierelement gelöst. Vorteilhafte Ausgestaltungen mit zweckmäßigen Weiterbildungen der Erfindung sind in den jeweiligen Unteransprüchen sowie in der nachfolgenden Beschreibung angegeben.

Das Fixierelement kann dazu eingerichtet sein, mindestens eine elektrische Leitung an einem Gegenstand, vorzugsweise an einem Panel, beispielsweise an einem Panel wie hierin (beispielsweise vorstehend) beschrieben, zu fixieren. Das Fixierelement kann mindestens einen Befestigungsabschnitt aufweisen. Der Befestigungsabschnitt kann dazu eingerichtet sein, das Fixierelement an dem Gegenstand, vorzugsweise dem Panel, zu befestigen. Das Fixierelement kann mindestens einen Aufnahmeabschnitt aufweisen, der dazu eingerichtet sein kann, die elektrische Leitung zumindest teilweise aufzunehmen. Das Fixierelement kann mindestens ein Greifmerkmal aufweisen. Das Greifmerkmal kann dazu eingerichtet sein, durch mindestens einen Handhabungsroboter gegriffen zu werden, insbesondere in Eingriffsverbindung zu gelangen, vorzugsweise um das Fixierelement an dem Panel zu positionieren, und vorzugsweise an dem Gegenstand bzw. Panel zu befestigen.

Im Stand der Technik werden elektrische Leitungen in der Regel manuell, d.h. von entsprechenden Monteuren händisch, an einem entsprechenden Gegenstand, beispielsweise an einem Panel, befestigt. Im Gegensatz zum Stand der Technik ermöglicht das hierin beschriebene Fixierelement eine roboterunterstützte, vorzugsweise vollautomatisierte, Fixierung der entsprechenden elektrischen Leitung(en) am entsprechenden Gegenstand, vorzugsweise Panel, insbesondere durch das (vorzugsweise eigens) zum Greifen durch den Handhabungsroboter konfigurierte Greifmerkmal und das anschließende Handhaben und/oder Positionieren des Fixierelements durch den Handhabungsroboter. Dadurch kann/können die elektrische(n) Leitung(en) relativ schnell und/oder zeiteffizient fixiert werden, im Vergleich zur manuellen Befestigung im Stand der Technik.

Außerdem kann dadurch die elektrische Leitung an dem Gegenstand, insbesondere an dem Panel, fixiert werden, insbesondere in größeren Stückzahlen, beispielsweise in einer Fertigungshalle, anstatt direkt am jeweiligen Endmontageort, beispielsweise an einer Baustelle. Das Panel, mit der mittels des Fixierelements daran befestigten elektrischen Leitung, kann dann als Teil einer Wand und/oder einer Decke eines Raums des jeweiligen Gebäudes montiert werden. Dadurch kann der Montageprozess zum Montieren der elektrische(n) Leitung(en) relativ effizient gestaltet werden, beispielsweise in einer oder mehreren Fertigungslinien. Dadurch können die Stückzahlen der vormontierten Panele effizient erhöht werden, insbesondere im Vergleich zur manuellen Montage der elektrischen Leitungen, insbesondere vor Ort an dem jeweiligen Endmontageort, beispielsweise an einer Baustelle.

Außerdem können die elektrischen Leitungen dadurch präziser, d.h. mit geringeren Abweichungen gegenüber einer Sollposition, an dem Gegenstand, vorzugsweise Panel, montiert werden, im Vergleich zur manuellen Montage. Dadurch können beispielsweise Montagefehler vermieden oder zumindest reduziert werden. Außerdem kann dadurch allgemein eine höhere Montagequalität erreicht werden.

Das Fixierelement kann als Schelle, beispielsweise als Einzel- oder Doppelschelle, und/oder als Klammer ausgebildet sein.

Der Aufnahmeabschnitt kann dazu eingerichtet sein, die elektrische Leitung zumindest teilweise aufzunehmen. Beispielsweise kann der Aufnahmeabschnitt dazu eingerichtet sein, sich im montierten Zustand zumindest über und/oder um einen Umfang der elektrischen Leitung, beispielsweise über und/oder um mindestens 30%, vorzugsweise mindestens 40%, vorzugsweise mindestens 50% eines Umfangs der elektrischen Leitung, zu erstrecken, insbesondere um die elektrische Leitung zumindest teilweise einzuhüllen.

Der Befestigungsabschnitt kann mindestens eine Befestigungsfläche, vorzugsweise mehrere Befestigungsflächen, aufweisen, die dazu eingerichtet sein kann/können, mindestens ein Befestigungselement, beispielsweise mindestens eine Schraube, zumindest teilweise aufzunehmen, um, durch Wechselwirkung des Befestigungselements mit dem Panel, das Fixierelement an dem Panel zu befestigen. Alternativ, oder zusätzlich, kann das Befestigungselement an der Befestigungsfläche ausgebildet, beispielsweise einstückig oder monolithisch ausgebildet, und/oder an der Befestigungsfläche befestigt, insbesondere vormontiert, sein.

Das Fixierelement kann dazu eingerichtet sein, durch einen einzigen Handhabungsroboter gegriffen zu sein und an dem Gegenstand bzw. Panel befestigt zu werden. Dadurch kann der Montagevorgang effizienter gestaltet werden. Alternativ können mehrere Handhabungsroboter vorgesehen sein, wobei zumindest ein erster Handhabungsroboter das Fixierelement greifen kann und zumindest ein zweiter Handhabungsroboter das Fixierelement an dem Gegenstand bzw. Panel befestigen kann.

Das Greifmerkmal kann eine Greiffläche oder mehrere Greifflächen aufweisen, an welcher bzw. an welchen der Handhabungsroboter greifen, vorzugsweise andocken, kann. Vorzugsweise ist das Greifmerkmal, vorzugsweise die Greiffläche, eine im Wesentlichen ebene Fläche oder das Greifmerkmal, vorzugsweise die Greiffläche, weist zumindest eine im Wesentlichen ebene Fläche auf. Dadurch kann ein Greifen des Fixierelements durch den Handhabungsroboter erleichtert werden. Insbesondere kann dadurch eine Dichtigkeit, insbesondere eine fluiddichte Verbindung, zwischen dem Greifmerkmal, vorzugsweise der Greiffläche, und dem Handhabungsroboter verbessert werden, oder zumindest das Risiko einer Undichtigkeit, zwischen dem Greifmerkmal, vorzugsweise der Greiffläche, und dem Handhabungsroboter kann dadurch reduziert werden, insbesondere wenn der Handhabungsroboter dazu eingerichtet ist, mittels eines Vakuums, welches durch den Handhabungsroboter erzeugt werden kann, das Fixierelement zu greifen.

Vorzugsweise ist der Befestigungsabschnitt an einem ersten Ende des Fixierelements angeordnet und das Greifmerkmal ist an einem dem ersten Ende gegenüberliegenden zweiten Ende des Fixierelements angeordnet. Dadurch kann ein Befestigen des Fixierelements an dem Panel mittels des Befestigungsabschnitts und ein Greifen des Fixierelements an dem Greifmerkmal erleichtert werden, insbesondere indem potenzielle negative wechselwirkende Einflüsse beim Befestigen des Fixierelements an dem Panel mittels des Befestigungsabschnitts und beim Greifen des Fixierelements an dem Greifmerkmal, beispielsweise auf Grund von Platzmangel und/oder Kollisionen entsprechender Werkzeuge, vermieden oder zumindest reduziert werden können. Alternativ können das Greifmerkmal und der Befestigungsabschnitt an einem jeweiligen Abschnitt des Fixierelements angeordnet sein und/oder zumindest teilweise überlappend angeordnet sein. Beispielsweise kann das Greifmerkmal in zumindest einem Bereich des Befestigungsabschnitts angeordnet sein.

Alternativ, oder zusätzlich, kann der Befestigungsabschnitt an einem von dem Greifmerkmal distalen Ende und/oder distalen Abschnitt des Fixierelements angeordnet sein.

Vorzugsweise ist das Greifmerkmal, vorzugsweise die im Wesentlichen ebene Fläche, dazu eingerichtet, mittels eines Vakuums, welches durch den Handhabungsroboter erzeugt wird bzw. an einer Greifschnittstelle des Handhabungsroboters, welches zum Greifen des Fixierelements eingerichtet ist, herrscht, gegriffen zu werden. Alternativ, oder zusätzlich, kann das Fixierelement dadurch eingerichtet sein, von dem Handhabungsroboters durch Klemmen und/oder Einklemmen an dem Greifmerkmal gegriffen zu werden.

Vorzugsweise weist das Fixierelement mindestens eine Rippe auf, die vorzugsweise an einer der elektrischen Leitung zugewandten Fläche des Fixierelements ausgebildet ist, wenn die elektrische Leitung zumindest teilweise in dem Aufnahmeabschnitt aufgenommen ist. Die Rippe kann zur Versteifung des Fixierelements und/oder zum Arretieren der elektrischen Leitung in zumindest einer Richtung dienen, vorzugsweise entlang einer Längsachse der elektrischen Leitung, wenn die elektrische Leitung mittels des Fixierelements an dem Panel befestigt ist. Die Rippe kann dazu eingerichtet sein, mit der elektrischen Leitung und/oder mit einer Hülle, in der die elektrische Leitung angeordnet ist, in Wechselwirkung zu treten, wenn die elektrische Leitung mittels des Fixierelements an dem Panel befestigt ist. Insbesondere kann die Rippe dazu eingerichtet sein, in mindestens eine Vertiefung, die in der elektrischen Leitung und/oder in der Hülle ausgebildet ist, einzugreifen, wenn die elektrische Leitung mittels des Fixierelements an dem Panel befestigt ist. Beispielsweise kann die elektrische Leitung in einem Wellrohr angeordnet sein, wobei die Rippe dazu eingerichtet sein kann, in mindestens eine Rille des Wellrohrs, welche an einer Außenseite des Wellrohrs angeordnet sein kann, einzugreifen. Dadurch kann beispielsweise eine Auszugsicherheit der elektrischen Leitung erhöht werden.

Die eingangs genannte Aufgabe wird außerdem durch eine Vorrichtung gelöst. Vorteilhafte Ausgestaltungen mit zweckmäßigen Weiterbildungen der Erfindung sind in den jeweiligen Unteransprüchen sowie in der nachfolgenden Beschreibung angegeben. Die Vorteile, Merkmale und Ausführungen, wie vorstehend zur Elektrodose beschrieben, gelten auch für die Vorrichtung entsprechend.

Die Vorrichtung kann dazu eingerichtet sein, als Teil einer Wand und/oder einer Decke eines Raums eines Gebäudes montiert zu werden. Die Vorrichtung kann ein Panel aufweisen, welches eine Innenseite, die dem Raum zugewandt ist, und eine Außenseite, die von dem Raum abgewandt ist, aufweisen kann, bezogen auf einen montierten Zustand des Panels. Die Vorrichtung kann eine Öffnung aufweisen, die in dem Panel definiert sein kann. Die Vorrichtung kann mindestens eine Elektrodose aufweisen, die an der Außenseite des Panels montiert und/oder befestigt sein kann und sich zumindest teilweise durch die Öffnung erstrecken kann.

Durch die hierin, insbesondere im vorstehenden Absatz, beschriebene Vorrichtung kann die Elektrodose an der Außenseite des Panels, d.h. an einer im Raum nicht sichtbaren Seite des Panels, verdeckt hinter dem Panel bzw. hinter der Wand und/oder der Decke des Raums angeordnet bzw. montiert werden. Im Gegensatz hierzu werden im Stand der Technik Elektrodosen in der Regel an der im Raum sichtbaren Innenseite der Wand bzw. Decke mittels mindestens einer Befestigungsvorrichtung befestigt. Mit anderen Worten ermöglicht die hierin beschriebene Vorrichtung eine rückseitige Montage der Elektrodose an dem Panel, wohingegen im Stand der Technik eine frontseitige Montage an der jeweiligen Wand vorgesehen ist. Eine Montage der Elektrodosen an einer Innenseite der jeweiligen Wand bzw. Decke ist im Stand der Technik in der Regel erforderlich, da die Elektrodosen in der Regel an einer bereits stehenden Wand bzw. einer montierten Decke montiert werden, da bei der im Stand der Technik vorgesehenen Montage der Elektrodosen eine Außenseite der jeweiligen Wand bzw. Decke in der Regel nicht zugänglich ist. Demnach kann durch die vorliegende Vorrichtung die Ästhetik der Montage erhöht werden und/oder entsprechende Maßnahmen, beispielsweise das Vorsehen von Blenden, beispielsweise zum Verdecken einer entsprechenden Befestigungsvorrichtung der Elektrodose, reduziert werden. Außerdem kann dadurch eine größere Gestaltungsfreiheit bei der Konstruktion und/oder Konfiguration der Elektrodose, insbesondere einer Befestigungsvorrichtung der Elektrodose zum Befestigen der Elektrodose an dem Panel, ermöglicht werden. Beispielsweise kann die Befestigungsvorrichtung größer gebaut werden, da die Befestigungsvorrichtung ohnehin hinter dem Panel bzw. hinter der Wand und/oder hinter der Decke angeordnet werden kann. Im Stand der Technik ist man hingegen in der Regel bestrebt, die jeweilige Befestigungsvorrichtung möglichst kompakt und/oder unauffällig zu gestalten, um die äußere Sichtbarkeit der Befestigungsvorrichtung zu reduzieren bzw. um ein Verdecken der Befestigungsvorrichtung zu erleichtern.

Die hierin beschriebene Vorrichtung, einschließlich einer oder mehrerer Komponenten, die an der Vorrichtung befestigt ist/sind, kann dazu eingerichtet sein, als Modul, vorzugsweise als kohärente Einheit, vorgefertigt zu werden. Das Modul kann dadurch als zusammenhängende Einheit, beispielsweise an einer Baustelle, einbaubar sein. Dadurch kann die Montage der Vorrichtung, insbesondere der daran befestigten Komponenten, erleichtert und effizienter gestaltet werden.

Das Panel kann ein Trockenbauelement, ein Holzbrett, eine Kunststoffplatte, ein Hohlpanel oder ein anderes Panelelement sein.

Vorzugsweise weist die Vorrichtung mindestens eine elektrische Leitung auf, die mit der Elektrodose verbunden sein kann und zumindest teilweise entlang der Außenseite des Panels verlaufen kann.

Vorzugsweise kann die Vorrichtung mindestens ein Fixierelement aufweisen, das dazu eingerichtet sein kann, die elektrische Leitung an der Außenseite des Panels zu fixieren. Vorzugsweise ist das Fixierelement nach einer der hierin beschriebenen Ausführungsformen konfiguriert.

Vorzugsweise ist die Elektrodose nach einer der hierin beschriebenen Ausführungsformen konfiguriert.

Die eingangs genannte Aufgabe wird außerdem durch ein Werkzeug gelöst. Vorteilhafte Ausgestaltungen mit zweckmäßigen Weiterbildungen der Erfindung sind in den jeweiligen Unteransprüchen sowie in der nachfolgenden Beschreibung angegeben. Die Vorteile, Merkmale und Ausführungen, wie vorstehend zur Elektrodose beschrieben, gelten auch für die Vorrichtung entsprechend.

Das Werkzeug kann dazu eingerichtet sein, an einer Werkzeugaufnahme eines Handhabungsroboters montiert zu werden. Das Werkzeug kann dazu eingerichtet sein, eine Elektrodose, vorzugsweise eine Elektrodose nach einer der hierin beschriebenen Ausführungsformen, an mindestens einer Greifschnittstelle der Elektrodose zu greifen und die Elektrodose an einem Panel zu positionieren. Vorzugsweise ist das Panel dazu eingerichtet, als Teil einer Wand und/oder einer Decke eines Raums eines Gebäudes montiert zu werden.

Das Werkzeug kann als Vakuumgreifer und/oder Fingergreifer eingerichtet sein und/oder das Werkzeug kann mindestens einen Greifkopf aufweisen, der als Vakuumgreifer und/oder Fingergreifer eingerichtet sein kann.

Vorzugsweise ist das Greifwerkzeug dazu eingerichtet, die Elektrodose an dem Panel zu befestigen.

Vorzugsweise ist das Werkzeug dazu eingerichtet, mindestens eine elektrische Leitung, die mit der Elektrodose verbunden bzw. verbindbar ist, an dem Panel zu befestigen, vorzugsweise mittels mindestens eines Fixierelements, vorzugsweise mittels mindestens eines Fixierelements nach einer der hierin beschriebenen Ausführungsformen. Die Vorteile, Merkmale und Ausführungen, wie vorstehend zum Fixierelement beschrieben, gelten auch für das Werkzeug entsprechend.

Vorzugsweise ist das Werkzeug dazu eingerichtet, mindestens eine elektrische Leitung mit der Elektrodose zu verbinden.

Die eingangs genannte Aufgabe wird außerdem durch einen Handhabungsroboter gelöst. Vorteilhafte Ausgestaltungen mit zweckmäßigen Weiterbildungen der Erfindung sind in den jeweiligen Unteransprüchen sowie in der nachfolgenden Beschreibung angegeben.

Der Handhabungsroboter weist mindestens eine Werkzeugaufnahme und mindestens ein an der Werkzeugaufnahme montiertes und/oder montierbares Werkzeug, vorzugsweise mindestens ein an der Werkzeugaufnahme montiertes und/oder montierbares Werkzeug nach einer der hierin beschriebenen Ausführungsformen, auf.

Die eingangs genannte Aufgabe wird außerdem durch ein Verfahren zum Zusammenbauen einer Vorrichtung gelöst. Vorteilhafte Ausgestaltungen mit zweckmäßigen Weiterbildungen der Erfindung sind in den jeweiligen Unteransprüchen sowie in der nachfolgenden Beschreibung angegeben. Die Vorteile, Merkmale und Ausführungsbeispiele, wie hierin zur erfindungsgemäßen Elektrodose, zur erfindungsgemäßen Vorrichtung und zum erfindungsgemäßen Fixierelement beschrieben, gelten für das Verfahren entsprechend.

Die Vorrichtung kann dazu eingerichtet sein, als Teil einer Wand und/oder einer Decke eines Raums eines Gebäudes montiert zu werden.

Das Verfahren kann aufweisen:
(a) Bereitstellen eines Panels, welches eine Innenseite, die dem Raum zugewandt ist, und eine Außenseite, die von dem Raum abgewandt ist, aufweist, bezogen auf einen montierten Zustand des Panels.

Das Verfahren kann aufweisen:
(b) Greifen mindestens einer Elektrodose an mindestens einer Greifschnittstelle mittels mindestens eines Handhabungsroboters;

Das Verfahren kann aufweisen:
(c) Positionieren der Elektrodose mittels des Handhabungsroboters an der Außenseite des Panels.

Das Verfahren kann aufweisen:
(d) Befestigen der Elektrodose an der Außenseite des Panels.

Vorzugsweise wird Schritt (d) mittels des Handhabungsroboters oder mittels mindestens eines weiteren Handhabungsroboters durchgeführt.

Vorzugsweise weist das Verfahren auf:
Greifen mindestens einer elektrischen Leitung mittels des Handhabungsroboters oder mittels mindestens eines weiteren Handhabungsroboters.

Vorzugsweise weist das Verfahren auf:
Positionieren der elektrischen Leitung an der Außenseite des Panels mittels des Handhabungsroboters oder mittels mindestens eines weiteren Handhabungsroboters.

Vorzugsweise weist das Verfahren auf:
Verbinden der elektrischen Leitung mit mindestens einem Anschlusselement der Elektrodose mittels des Handhabungsroboters oder mittels mindestens eines weiteren Handhabungsroboters, um die Elektrodose mit der elektrischen Leitung zu verbinden.

Vorzugsweise weist das Anschlusselement mindestens eine Aussparung auf. Vorzugsweise wird, beim Verbinden der elektrischen Leitung mit dem Anschlusselement mittels des Handhabungsroboters, der Handhabungsroboter zumindest teilweise von der Aussparung des Anschlusses aufgenommen und/oder der Handhabungsroboter zumindest teilweise durch die Aussparung bewegt.

Das hierin beschriebene Verfahren ist nicht auf die Reihenfolge, in welcher die Schritte hierin beschrieben sind, beschränkt. Stattdessen können die Schritte in beliebiger Reihenfolge durchgeführt werden.

Die folgende Aspekteliste stellt alternative und/oder zusätzliche Merkmale der Erfindung dar:
1. Eine Elektrodose, die dazu eingerichtet ist, an einem Gegenstand, vorzugsweise einer Platte, vorzugsweise einem Panel, befestigt zu werden, wobei das Panel dazu eingerichtet ist, an einem Gebäude, vorzugsweise an einer Wand und/oder einer Decke eines Raums des Gebäudes, vorzugsweise als Teil der Wand und/oder der Decke des Raums, montiert zu werden, wobei das Panel eine Innenseite, die vorzugsweise dem Raum zugewandt ist, und eine Außenseite, die vorzugsweise von dem Raum abgewandt ist, aufweist, bezogen auf einen montierten Zustand des Panels, wobei die Elektrodose aufweist:
   mindestens eine Befestigungsvorrichtung, die dazu eingerichtet ist, die Elektrodose an der Außenseite des Panels zu befestigen; und
   mindestens eine Greifschnittstelle, die dazu eingerichtet ist, durch mindestens einen Handhabungsroboter in Eingriffsverbindung zu gelangen, vorzugsweise um die Elektrodose mittels des Handhabungsroboters an dem Panel zu positionieren.
2. Die Elektrodose nach Aspekt 1, zusätzlich aufweisend mindestens ein Anschlusselement, das dazu eingerichtet ist, mit mindestens einer elektrischen Leitung verbunden zu werden, um die Elektrodose mit der elektrischen Leitung zu verbinden, wobei das Anschlusselement mindestens eine Aussparung aufweist, die dazu eingerichtet ist, zumindest einen Abschnitt eines Handhabungsroboters, der die elektrische Leitung greift, zumindest teilweise aufzunehmen und/oder zumindest einen Abschnitt eines Handhabungsroboters, der die elektrische Leitung greift, durch die Aussparung passieren zu lassen, um die elektrische Leitung mittels des Handhabungsroboters mit dem Anschlusselement zu verbinden.
3. Die Elektrodose nach Aspekt 2, wobei das Anschlusselement mindestens zwei Aussparungen aufweist, die an gegenüberliegenden Seiten des Anschlusselements angeordnet sind.
4. Die Elektrodose nach Aspekt 2 oder 3, wobei:
   sich das Anschlusselement, insbesondere eine Längsachse des Anschlusselements, zumindest bereichsweise entlang der Außenseite des Panels und/oder im Wesentlichen parallel zur Außenseite des Panels erstreckt;
      und/oder
   das Anschlusselement dazu eingerichtet ist, dass die elektrische Leitung entlang einer Richtung, die sich entlang der Außenseite des Panels und/oder im Wesentlichen parallel zur Außenseite des Panels erstreckt, mit dem Anschlusselement verbunden wird.
5. Die Elektrodose nach einem der vorhergehenden Aspekte, zusätzlich aufweisend mindestens einen Anschlag, der dazu eingerichtet ist, zumindest bereichsweise an der Außenseite des Panels anzuliegen, um ein Einschieben der Elektrodose in eine Öffnung des Panels zu begrenzen.
6. Die Elektrodose nach einem der vorhergehenden Aspekte, wobei die Elektrodose mindestens zwei Befestigungsvorrichtungen aufweist, die zur Befestigung der Elektrodose an der Außenseite des Panels eingerichtet sind, wobei die Befestigungsvorrichtungen an gegenüberliegenden Seiten der Elektrodose angeordnet sind.
7. Die Elektrodose nach einem der vorhergehenden Aspekte, wobei die Elektrodose mindestens einen Hauptkörper aufweist, wobei die Befestigungsvorrichtung jeweils als Lasche ausgebildet ist, die sich von dem Hauptkörper weg erstreckt, vorzugsweise seitlich weg erstreckt, vorzugsweise um mindestens 2 cm, vorzugsweise um mindestens 3 cm, vorzugsweise um mindestens 4 cm, vorzugsweise um mindestens 5 cm, vorzugsweise um mindestens 6 cm, vorzugsweise um mindestens 7 cm.
8. Die Elektrodose nach einem der vorhergehenden Aspekte, wobei die Elektrodose mindestens einen Kontakt zum Anschließen mindestens eines Kabels an der Innenseite des Panels aufweist, wenn das Panel in einem montierten Zustand ist und die Elektrodose an dem Panel befestigt ist, wobei die Elektrodose zusätzlich mindestens einen Anschluss zum Anschließen mindestens eines Smartgeräts aufweist, vorzugsweise wobei die Elektrodose den Anschluss und/oder das Smartgerät aufweist.
9. Die Elektrodose nach Aspekt 8, zusätzlich aufweisend mindestens ein Gehäuse, das dazu eingerichtet, das Smartgerät zumindest teilweise aufzunehmen, vorzugsweise wobei die Elektrodose derart eingerichtet ist, dass das Gehäuse zumindest teilweise, vorzugsweise vollständig, an der Außenseite angeordnet ist.
10. Die Elektrodose nach einem der vorhergehenden Aspekte, wobei die Elektrodose als kohärente Einheit eingerichtet ist.
11. Ein Fixierelement, das dazu eingerichtet ist, mindestens eine elektrische Leitung an einem Gegenstand, vorzugsweise einem Panel, zu fixieren, wobei das Fixierelement aufweist:
   mindestens einen Befestigungsabschnitt, der dazu eingerichtet, das Fixierelement an dem Panel zu befestigen;
   mindestens ein Greifmerkmal, das dazu eingerichtet ist, durch mindestens einen Handhabungsroboter in Eingriffsverbindung zu gelangen, um das Fixierelement an dem Panel zu positionieren;
   vorzugsweise mindestens einen Aufnahmeabschnitt, der dazu eingerichtet ist, die elektrische Leitung zumindest teilweise aufzunehmen.
12. Das Fixierelement nach Aspekt 11, wobei:
   das Greifmerkmal eine im Wesentlichen ebene Fläche ist;
      oder
   das Greifmerkmal zumindest eine im Wesentlichen ebene Fläche aufweist.
13. Das Fixierelement nach Aspekt 11 oder 12, wobei der Befestigungsabschnitt:
   an einem ersten Ende des Fixierelements angeordnet ist und das Greifmerkmal an einem dem ersten Ende gegenüberliegenden zweiten Ende des Fixierelements angeordnet ist;
      und/oder
   an einem von dem Greifmerkmal distalen Ende und/oder distalen Abschnitt des Fixierelements angeordnet ist.
14. Das Fixierelement nach einem der Aspekte 11 bis 13, wobei das Greifmerkmal, vorzugsweise die im Wesentlichen ebene Fläche, dazu eingerichtet ist, mittels eines Vakuums, welches durch den Handhabungsroboter erzeugt wird bzw. an einer Greifschnittstelle des Handhabungsroboters, welches zum Greifen des Fixierelements eingerichtet ist, herrscht, gegriffen zu werden.
15. Das Fixierelement nach einem der Aspekte 11 bis 14, zusätzlich aufweisend mindestens eine Rippe, die vorzugsweise an einer der elektrischen Leitung zugewandten Fläche des Fixierelements ausgebildet ist, wenn die elektrische Leitung zumindest teilweise in dem Aufnahmeabschnitt aufgenommen ist.
16. Eine Vorrichtung, die dazu eingerichtet ist, an einem Gebäude, vorzugsweise an einer Wand und/oder einer Decke eines Raums des Gebäudes, vorzugsweise als Teil der Wand und/oder der Decke, montiert zu werden, wobei die Vorrichtung aufweist:
   ein Panel, welches eine Innenseite, die vorzugsweise dem Raum zugewandt ist, und eine Außenseite, die vorzugsweise von dem Raum abgewandt ist, aufweist, bezogen auf einen montierten Zustand des Panels;
   mindestens eine Elektrodose, die an der Außenseite des Panels montiert und/oder befestigt ist und sich zumindest teilweise durch die Öffnung erstreckt; vorzugsweise mindestens eine Öffnung, die in dem Panel definiert ist und vorzugsweise durch die sich die Elektrodose zumindest teilweise erstreckt.
17. Die Vorrichtung nach Aspekt 16, zusätzlich aufweisend mindestens eine elektrische Leitung, die mit der Elektrodose verbunden ist und zumindest teilweise entlang der Außenseite des Panels verläuft.
18. Die Vorrichtung Aspekt 17, zusätzlich aufweisend mindestens ein Fixierelement, das dazu eingerichtet ist, die elektrische Leitung an der Außenseite des Panels zu fixieren, vorzugsweise wobei das Fixierelement nach einem der Aspekte 11 bis 17 konfiguriert ist.
19. Die Vorrichtung nach einem der Aspekte 16 bis 18, wobei die Elektrodose gemäß einem der Aspekte 1 bis 10 konfiguriert ist.
20. Ein Werkzeug, das dazu eingerichtet ist, an einer Werkzeugaufnahme eines Handhabungsroboters montiert zu werden, wobei das Werkzeug dazu eingerichtet ist, eine Elektrodose, vorzugsweise eine Elektrodose nach einem der Aspekte 1 bis 10, an mindestens einer Greifschnittstelle der Elektrodose zu greifen und die Elektrodose an einem Panel zu positionieren, vorzugsweise wobei das Panel dazu eingerichtet ist, an einer Wand und/oder einer Decke eines Raums eines Gebäudes, vorzugsweise als Teil der Wand und/oder der Decke, montiert zu werden.
21. Das Werkzeug nach Aspekt 20, wobei das Greifwerkzeug dazu eingerichtet ist, die Elektrodose an dem Panel zu befestigen.
22. Das Werkzeug nach Aspekt 20 oder 21, wobei das Werkzeug dazu eingerichtet ist, mindestens eine elektrische Leitung, die mit der Elektrodose verbunden bzw. verbindbar ist, an dem Panel zu befestigen, vorzugsweise mittels mindestens eines Fixierelements, vorzugsweise mittels mindestens eines Fixierelements nach einem der Aspekte 11 bis 15.
23. Das Werkzeug nach einem der Aspekte 20 bis 22, wobei das Werkzeug dazu eingerichtet ist, mindestens eine elektrische Leitung mit der Elektrodose zu verbinden.
24. Ein Handhabungsroboter mit mindestens einer Werkzeugaufnahme und mindestens einem an der Werkzeugaufnahme montierten und/oder montierbaren Werkzeug nach einem der Aspekte 20 bis 23.
25. Ein Verfahren zum Zusammenbauen einer Vorrichtung, die dazu eingerichtet ist, an einer Wand und/oder einer Decke eines Raums eines Gebäudes, vorzugsweise als Teil der Wand und/oder der Decke, montiert zu werden, wobei das Verfahren aufweist:
   (a) Bereitstellen eines Panels, welches eine Innenseite, die vorzugsweise dem Raum zugewandt ist, und eine Außenseite, die von dem Raum abgewandt ist, aufweist, bezogen auf einen montierten Zustand des Panels;
   (b) Greifen mindestens einer Elektrodose an mindestens einer Greifschnittstelle mittels mindestens eines Handhabungsroboters;
   (c) Positionieren der Elektrodose mittels des Handhabungsroboters an der Außenseite des Panels;
   (d) Befestigen der Elektrodose an der Außenseite des Panels.
26. Das Verfahren nach Aspekt 25, wobei Schritt (d) mittels des Handhabungsroboters oder mittels mindestens eines weiteren Handhabungsroboters durchgeführt wird.
27. Das Verfahren nach Aspekt 25 oder 26, zusätzlich aufweisend:
   Greifen mindestens einer elektrischen Leitung mittels des Handhabungsroboters oder mittels mindestens eines weiteren Handhabungsroboters;
   Positionieren der elektrischen Leitung an der Außenseite des Panels mittels des Handhabungsroboters oder mittels mindestens eines weiteren Handhabungsroboters;
   Verbinden der elektrischen Leitung mit mindestens einem Anschlusselement der Elektrodose mittels des Handhabungsroboters oder mittels mindestens eines weiteren Handhabungsroboters, um die Elektrodose mit der elektrischen Leitung zu verbinden.
28. Das Verfahren nach Aspekt 27, wobei das Anschlusselement mindestens eine Aussparung aufweist und wobei, beim Verbinden der elektrischen Leitung mit dem Anschlusselement mittels des Handhabungsroboters, der Handhabungsroboter zumindest teilweise von der Aussparung des Anschlusses aufgenommen wird und/oder der Handhabungsroboter zumindest teilweise durch die Aussparung bewegt wird.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.
- Fig. 1A und 1B: zeigen, in schematischen und perspektivischen Ansichten, eine Elektroinstallation aus dem Stand der Technik
- Fig. 2: zeigt, in einer schematischen Querschnittsansicht, eine Elektrodose gemäß einer Ausführungsform der vorliegenden Erfindung;
- Fig. 3: zeigt, in einer weiteren schematischen Querschnittsansicht, die Elektrodose aus Fig. 2;
- Fig. 4: zeigt, in einer schematischen und perspektivischen Ansicht, die Elektrodose aus Fig. 2 und 3;
- Fig. 5: zeigt, in einer weiteren schematischen und perspektivischen Ansicht, die Elektrodose aus Fig. 2 bis 4;
- Fig. 6: zeigt, in einer schematischen Vorderansicht, die Elektrodose aus Fig. 2 bis 5;
- Fig. 7: zeigt, in einer schematischen und perspektivischen Ansicht, eine Elektrodose gemäß einer weiteren Ausführungsform der vorliegenden Erfindung;
- Fig. 8: zeigt, in einer weiteren schematischen und perspektivischen Ansicht, die Elektrodose aus Fig. 7;
- Fig. 9: zeigt, in einer schematischen Vorderansicht, die Elektrodose aus Fig. 7 und 8;
- Fig. 10: zeigt, in einer schematischen Querschnittsansicht, die Elektrodose aus Fig. 7 bis 9;
- Fig. 11: zeigt, in einer weiteren schematischen Querschnittsansicht, die Elektrodose aus Fig. 7 bis 10;
- Fig. 12: zeigt, in einer schematischen und perspektivischen Ansicht, ein Fixierelement gemäß einer Ausführungsform der vorliegenden Erfindung;
- Fig. 13: zeigt, in einer schematischen Vorderansicht, das Fixierelement aus Fig. 12;
- Fig. 14: zeigt, in eine Querschnittsansicht entlang der in Fig. 13 gezeigten Linie D-D, das Fixierelement aus Fig. 12 und 13;
- Fig. 15: zeigt, in einer schematischen Querschnittsansicht, das Fixierelement aus Fig. 12 bis 14 in einem montierten Zustand;
- Fig. 16: zeigt, in einer schematischen Draufsicht, das Fixierelement aus Fig. 12 bis 15;
- Fig. 17: zeigt, in einer schematischen Rückansicht, eine Vorrichtung gemäß einer Ausführungsform der vorliegenden Erfindung;
- Fig. 18: zeigt, in einer schematischen Vorderansicht, die Vorrichtung aus Fig. 17;
- Fig. 19: zeigt, in einer schematischen und perspektivischen Ansicht, die Vorrichtung aus Fig. 17 und 18;
- Fig. 20: zeigt, in einer weiteren schematischen und perspektivischen Ansicht, die Vorrichtung aus Fig. 17 bis 19.

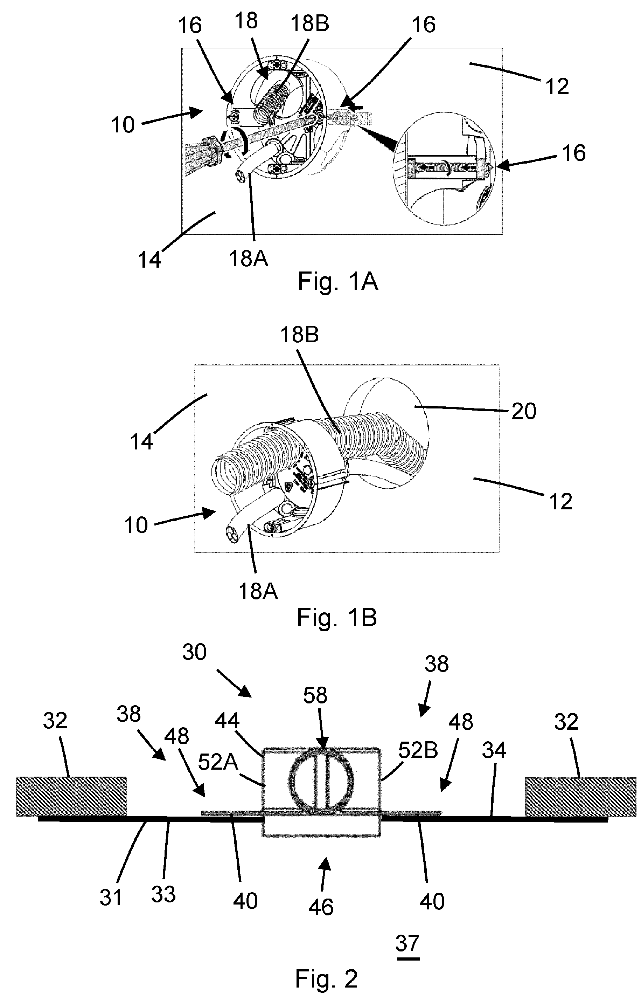

Wie bereits eingangs beschrieben, werden im Stand der Technik Elektroinstallationen in der Regel manuell durchgeführt, in der Regel vor Ort am jeweiligen Gebäude, beispielsweise an einer Baustelle. Derartige manuelle Prozesse erfordern jedoch qualifizierte und/oder kostenintensive Arbeitskräfte. Dies führt zu einem erheblichen Produktionsaufwand und einer relativ geringen Effizienz. Fig. 1A und 1B zeigen, in schematischen und perspektivischen Ansichten, eine übliche Elektroinstallation aus dem Stand der Technik. Insbesondere wird eine Elektrodose oder eine Elektroinstallation 10 an einer Innenseite 12 einer Wand 14 befestigt, beispielsweise mittels Schrauben 16. Die Elektrodose bzw. Elektroinstallation 10 weist mehrere Leitungen 18 auf, die eine elektrische Leitung 18A und ein Wellrohr 18B umfassen. Die Leitungen 18 erstrecken sich durch eine Öffnung 20, die in der Wand 14 definiert ist. Die Elektrodose oder Elektroinstallation 10 wird beim Montieren an der Innenseite 12 der Wand 14 in die Öffnung 20 geschoben und anschließend mittels der Schrauben mit der Wand 14 befestigt. Die Schrauben 16 können gelöst werden, um bei Bedarf die Elektrodose oder Elektroinstallation 10 aus der Öffnung 20 wieder entfernen zu können.

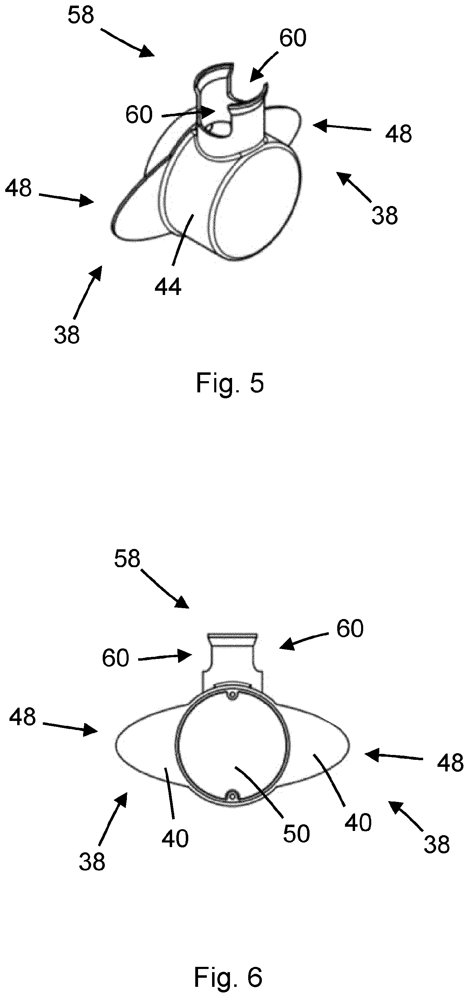

Fig. 2 bis 6 zeigen eine Elektroinstallation oder eine Elektrodose 30 gemäß einer Ausführungsform der vorliegenden Erfindung. Die Elektrodose 30 kann dazu eingerichtet sein, an einem Panel 31 befestigt zu werden. Das Panel 31 kann ein Trockenbauelement, ein Holzbrett, eine Kunststoffplatte, ein Hohlpanel oder ein anderes Panelelement sein. Das Panel 31 kann dazu eingerichtet sein, als Teil einer Wand 32 und/oder einer Decke 32 eines Raums 37 eines Gebäudes montiert zu werden. Das Panel 31 kann eine Innenseite 33, die dem Raum zugewandt ist, und eine Außenseite 34, die von dem Raum 37 abgewandt ist, aufweisen, bezogen auf einen montierten Zustand des Panels 31.

Die Elektrodose 30 kann mindestens eine Befestigungsvorrichtung 38 aufweisen, die dazu eingerichtet sein kann, die Elektrodose 30 an der Außenseite 34 des Panels 31 zu befestigen, beispielsweise mittels Schrauben, Clips, Klammern, etc. Die Befestigungsvorrichtung 38 kann mindestens eine Befestigungsfläche 40, vorzugsweise mehrere Befestigungsflächen 40, aufweisen. Die Befestigungsfläche 40 kann dazu eingerichtet sein, mindestens ein Befestigungselement, beispielsweise mindestens eine Schraube, zumindest teilweise aufzunehmen, um, durch Wechselwirkung des Befestigungselements mit dem Panel 31, die Elektrodose 30 an dem Panel 31 zu befestigen. Alternativ, oder zusätzlich, kann das Befestigungselement an der Befestigungsfläche 40 ausgebildet sein, beispielsweise einstückig oder monolithisch ausgebildet, und/oder an der Befestigungsfläche 40 befestigt, insbesondere vormontiert, sein.

Die Elektrodose 30 kann einen Hauptkörper 44 aufweisen, der sich beispielsweise durch eine Öffnung 46, die in dem Panel 31 ausgebildet ist, erstrecken kann, wenn die Elektrodose 30 am Panel 31 montiert ist. Die Befestigungsvorrichtung 38 kann sich von dem Hauptkörper 44, vorzugsweise seitlich, weg erstecken. Beispielsweise kann die Befestigungsvorrichtung 38 zwei Laschen 48 aufweisen, die sich jeweils von dem Hauptkörper 36 weg erstrecken.

Im Hauptkörper 44 können mehrere elektrische Kontaktelemente angeordnet sein. Der Hauptkörper 44 kann eine Öffnung 50 aufweisen, die dazu eingerichtet sein kann, einen elektrischen Stecker eines Geräts, beispielsweise eines Haushaltsgeräts, zumindest teilweise aufzunehmen, um den elektrischen Stecker mit der Elektrodose 30 elektrisch zu verbinden, um das Gerät mit Strom zu versorgen.

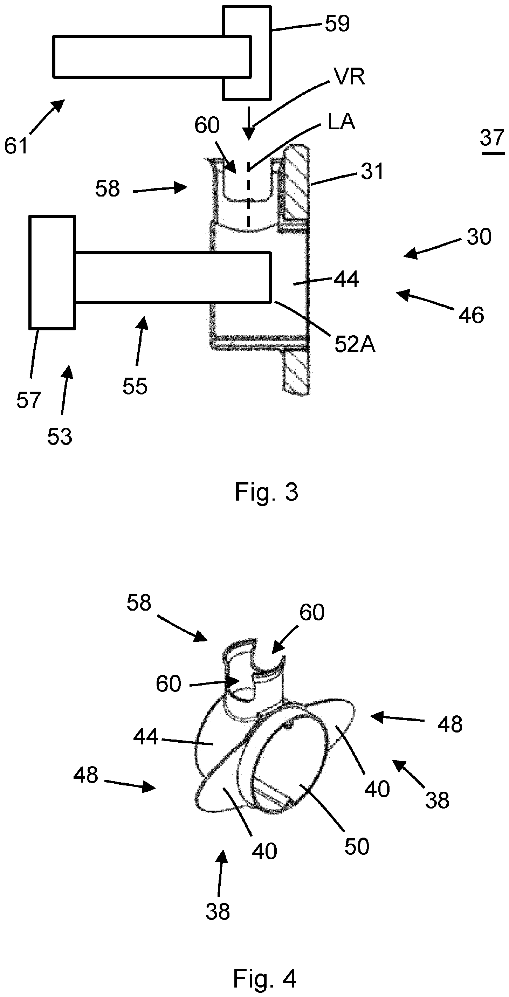

Die Elektrodose 30 kann mindestens eine Greifschnittstelle 52 aufweisen, die dazu eingerichtet sein kann, durch mindestens einen Handhabungsroboter 53 (siehe Fig. 3) gegriffen zu werden, d.h. in Eingriffsverbindung zu gelangen, um die Elektrodose 30 mittels des Handhabungsroboters 53 an dem Panel 31 zu positionieren. Die Greifschnittstelle 52 kann eine eigens zum Greifen durch den Handhabungsroboter 53 eingerichtete Gestaltung, insbesondere eine entsprechende Dimensionierung und/oder Form und/oder Kontur, aufweisen. Beispielsweise kann die Greifschnittstelle 52 eine Gestaltung aufweisen, die an eine Gestaltung, beispielsweise an mindestens eine Größe und/oder Form und/oder Kontur, eines Greifers des Handhabungsroboters 53 angepasst und/oder abgestimmt ist. Beispielsweise kann die Greifschnittstelle 52 mindestens zwei Greifstellen 52A, 52B, vorzugsweise mindestens zwei sich gegenüberliegende Greifstellen, aufweisen, die dazu eingerichtet sind, durch den Handhabungsroboter 53 gegriffen zu werden. Beispielsweise können die Greifstellen 52A, 52B derart voneinander beabstandet sein und/oder derart geformt sein, dass sie durch den Handhabungsroboter 53 gegriffen werden können. Alternativ kann die Greifschnittstelle 52 auch nur eine Greifstelle aufweisen, die beispielsweise eine Form und/oder eine Größe aufweist, die es ermöglicht, mit dem Handhabungsroboter 53 in Eingriffsverbindung zu gelangen bzw. durch den Handhabungsroboter 53 gegriffen zu werden. Die Greifschnittstelle 52 bzw. die Greifstelle kann beispielsweise eine im Wesentlichen ebene Fläche sein.

Ein Werkzeug 55 kann an einer Werkzeugaufnahme 57 des Handhabungsroboters 53 montierbar bzw. montiert sein. Das Werkzeug 55 kann dazu eingerichtet sein, die Elektrodose 30 an der Greifschnittstelle 52 der Elektrodose 30 zu greifen und die Elektrodose 30 an dem Panel 31 zu positionieren.

Die Elektrodose 30 kann mindestens ein Anschlusselement 58 mit einer Längsachse LA aufweisen, das dazu eingerichtet sein kann, mit mindestens einer elektrischen Leitung 59 verbunden zu werden, um die Elektrodose 30 mit der elektrischen Leitung 59 zu verbinden.

Das Anschlusselement 58 kann mindestens eine Aussparung 60 aufweisen. Die Aussparung 60 kann dazu eingerichtet sein, zumindest einen Abschnitt eines Handhabungsroboters 61 (siehe Fig. 3), der die elektrische Leitung 59 greift, beim Verbinden der elektrischen Leitung 59 mit dem Anschlusselement 58 zumindest teilweise aufzunehmen und/oder zumindest einen Abschnitt des Handhabungsroboters 61, der die elektrische Leitung 59 greift, durch die Aussparung 60 passieren zu lassen.

Das Anschlusselement 58, insbesondere die Längsachse LA des Anschlusselements 58, kann sich zumindest bereichsweise entlang der Außenseite 34 des Panels 31 und/oder im Wesentlichen parallel zur Außenseite 34 des Panels 31 erstrecken. Alternativ, oder zusätzlich, kann das Anschlusselement 58 dazu eingerichtet sein, dass die elektrische Leitung 59 entlang einer Richtung VR, die sich entlang der Außenseite 34 des Panels und/oder im Wesentlichen parallel zur Außenseite 34 des Panels 31 erstreckt, mit dem Anschlusselement 58 verbunden wird. Mit anderen Worten, die elektrische Leitung 59 kann beim Verbinden der elektrischen Leitung 59 mit dem Anschlusselement 58 mittels des Handhabungsroboters 61 entlang der Richtung VR bewegt werden.

Die Elektrodose 30 kann mindestens einen Anschlag aufweisen, der dazu eingerichtet sein kann, zumindest bereichsweise an der Außenseite 34 des Panels 31 anzuliegen, um ein Einschieben der Elektrodose 30 in die Öffnung 46 des Panels 31 zu begrenzen. Beispielsweise kann die Befestigungsvorrichtung 38, genauer genommen die Laschen 48, den Anschlag aufweisen oder selbst den Anschlag bilden. Dadurch kann eine Position der Elektrodose 30 relativ zum Panel 31 vordefiniert und/oder eingehalten werden.

Die Elektrodose 30 kann als kohärente Einheit eingerichtet sein.

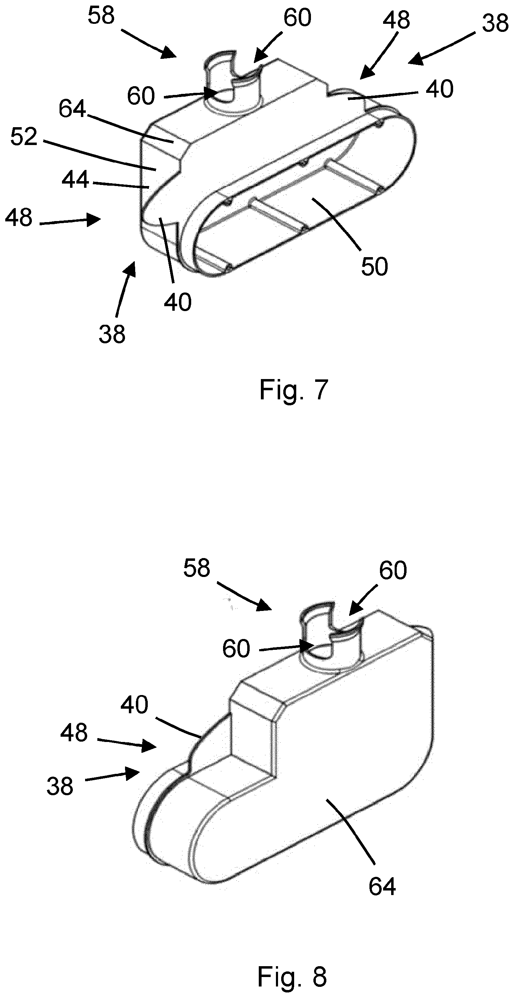

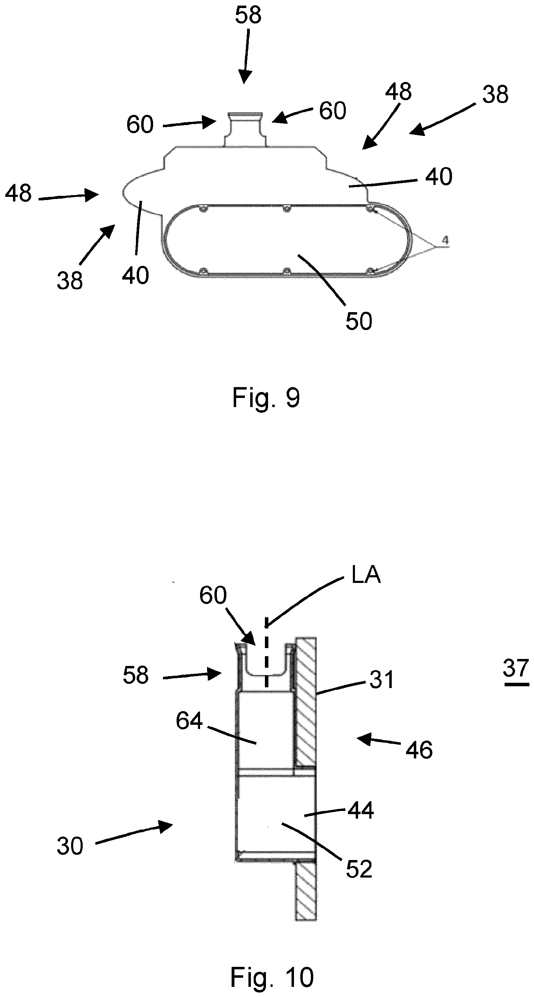

Fig. 7 bis 11 zeigen eine weitere Ausführungsform der Elektrodose 30, die mit der Ausführungsform aus den Fig. 2 bis 6 kombiniert werden kann.

Die Elektrodose 30 der Fig. 7 bis 11 kann mindestens ein Gehäuse 64 aufweisen, das dazu eingerichtet sein kann, ein Smartgerät zumindest teilweise, vorzugsweise vollständig, aufzunehmen. Die Elektrodose 30 kann derart eingerichtet sein, dass das Gehäuse 64 zumindest teilweise, vorzugsweise vollständig, an der Außenseite 34 des Panels 31 angeordnet ist, wenn die Elektrodose 30 an dem Panel 31 montiert ist und das Panel 31 an der Wand bzw. Decke 32 montiert ist. Die Elektrodose 30 kann mindestens einen Anschluss zum Anschließen des Smartgeräts und/oder eines Kabels, welches zum Verbinden der Elektrodose 30 mit dem Smartgerät eingerichtet ist, aufweisen.

Die Elektrodose 30, einschließlich des Gehäuses 64 und des darin angeordneten Smartgeräts, kann als kohärente Einheit eingerichtet sein.

Im Hauptkörper 44 können mehrere elektrische Kontaktelemente angeordnet sein. Der Hauptkörper 44 kann eine Öffnung 50 aufweisen, die dazu eingerichtet sein kann, einen elektrischen Stecker eines Geräts, beispielsweise eines Haushaltsgeräts, zumindest teilweise aufzunehmen, um den elektrischen Stecker mit der Elektrodose 30 elektrisch zu verbinden, um das Gerät mit Strom zu versorgen. Wie in den Fig. 7 bis 11 abgebildet, kann die Elektrodose 30 mit mehreren elektrischen Steckern, beispielsweise mit elektrischen Steckern mehrerer Geräte, elektrisch verbunden werden. Hierzu kann die Öffnung 50 entsprechend dimensioniert sein, um die mehreren elektrischen Stecker zumindest teilweise aufzunehmen, um die elektrischen Stecker mit der Elektrodose 30 elektrisch zu verbinden.

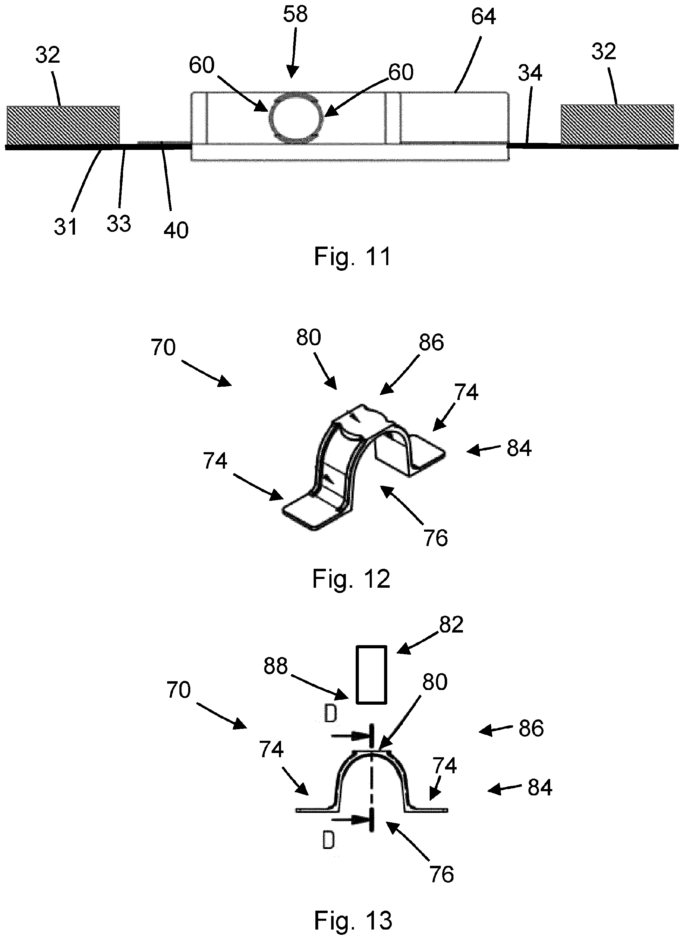

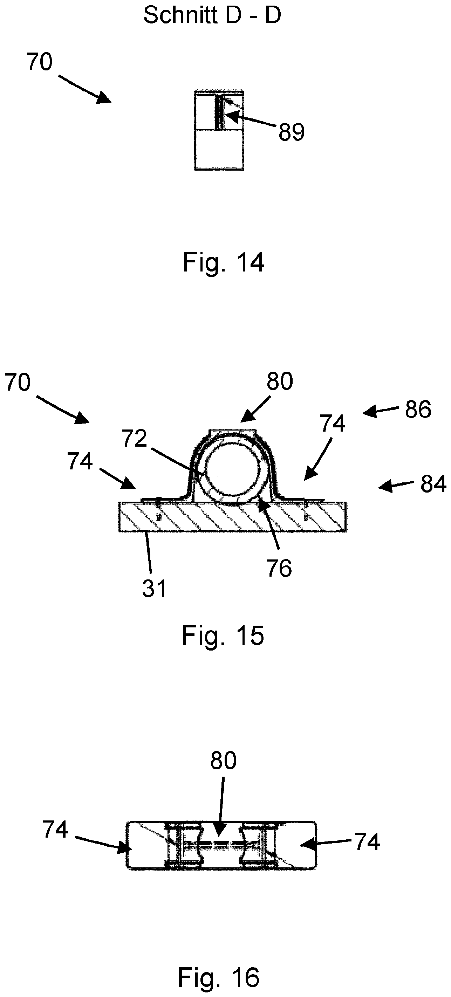

Fig. 12 bis 16 zeigen ein Fixierelement 70, das dazu eingerichtet sein kann, mindestens eine elektrische Leitung 72 (siehe Fig. 15) an einem Panel, beispielsweise dem Panel 31 aus Fig. 2, 3, 10 und 11, zu fixieren. Das Fixierelement 70 kann mindestens einen Befestigungsabschnitt 74 aufweisen, der dazu eingerichtet sein kann, das Fixierelement 70 an dem Panel 31 zu befestigen, beispielsweise mittels Schrauben, Clips, Klammern, etc.

Das Fixierelement 70 kann mindestens einen Aufnahmeabschnitt 76 aufweisen, der dazu eingerichtet sein kann, die elektrische Leitung 72 zumindest teilweise aufzunehmen. Das Fixierelement 70 kann mindestens ein Greifmerkmal 80 aufweisen, das dazu eingerichtet sein kann, durch mindestens einen Handhabungsroboter 82 in Eingriffsverbindung zu gelangen, beispielsweise kraftschlüssig und/oder formschlüssig, um das Fixierelement 70 an dem Panel 31 zu positionieren.

Der Befestigungsabschnitt 74 kann an einem ersten Ende 84 des Fixierelements 70 angeordnet sein und das Greifmerkmal 80 kann an einem dem ersten Ende 84 gegenüberliegenden zweiten Ende 86 des Fixierelements 70 angeordnet sein. Alternativ, oder zusätzlich, kann der Befestigungsabschnitt 74 an einem von dem Greifmerkmal 80 distalen Ende 86 und/oder distalen Abschnitt 86 des Fixierelements 70 angeordnet sein.

Das Greifmerkmal 80 kann eine im Wesentlichen ebene Fläche sein. Alternativ kann das Greifmerkmal 80 zumindest eine im Wesentlichen ebene Fläche aufweisen.

Das Greifmerkmal 80 kann dazu eingerichtet sein, mittels eines Vakuums, welches durch den Handhabungsroboter 82 erzeugt wird bzw. an einer Greifschnittstelle 88 des Handhabungsroboters 82, welches zum Greifen des Fixierelements 70 eingerichtet ist, herrscht, gegriffen zu werden.

Das Fixierelement 70 kann mindestens eine Rippe 89 aufweisen (siehe Fig. 14), die vorzugsweise an einer der elektrischen Leitung 72 zugewandten Fläche des Fixierelements 70 ausgebildet ist, wenn die elektrische Leitung 72 zumindest teilweise in dem Aufnahmeabschnitt 76 aufgenommen ist. Die Rippe 89 kann zur Versteifung des Fixierelements 70 und/oder zum Arretieren der elektrischen Leitung 72 in zumindest einer Richtung dienen, vorzugsweise entlang einer Längsachse der elektrischen Leitung 72, wenn die elektrische Leitung 72 mittels des Fixierelements 70 an dem Panel 31 befestigt ist. Die Rippe 89 kann dazu eingerichtet sein, mit der elektrischen Leitung 72 und/oder mit einer Hülle, in der die elektrische Leitung 72 angeordnet ist, in Wechselwirkung zu treten, wenn die elektrische Leitung 72 mittels des Fixierelements 70 an dem Panel 31 befestigt ist. Insbesondere kann die Rippe 89 dazu eingerichtet sein, in mindestens eine Vertiefung, die in der elektrischen Leitung 72 und/oder in der Hülle ausgebildet ist, einzugreifen, wenn die elektrische Leitung 72 mittels des Fixierelements 70 an dem Panel 31 befestigt ist. Beispielsweise kann die elektrische Leitung 72 in einem Wellrohr angeordnet sein, wobei die Rippe 89 dazu eingerichtet sein kann, in mindestens eine Rille des Wellrohrs, welche an einer Außenseite des Wellrohrs angeordnet sein kann, einzugreifen. Dadurch kann beispielsweise eine Auszugsicherheit der elektrischen Leitung 72 erhöht werden.

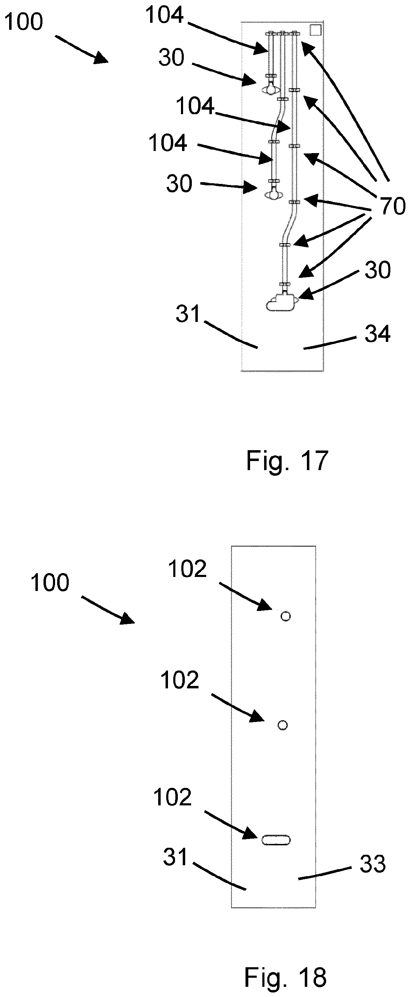

Die Fig. 17 bis 20 zeigen eine Vorrichtung 100, die dazu eingerichtet sein kann, als Teil einer Wand und/oder einer Decke eines Raums eines Gebäudes, beispielsweise der in den Fig. 2 und 11 gezeigten Wand bzw. Decke 32, montiert zu werden.

Die Vorrichtung 100 kann ein Panel, beispielsweise das Panel 31 aus den Fig. 2, 3, 10 und 11, aufweisen, welches eine Innenseite 33, die dem Raum zugewandt ist, und eine Außenseite 34, die von dem Raum abgewandt ist, aufweisen kann, bezogen auf einen montierten Zustand des Panels 31.

Die Vorrichtung 100 kann eine Öffnung 102 aufweisen, die in dem Panel 31 definiert sein kann.

Die Vorrichtung 100 kann mindestens eine Elektrodose aufweisen, beispielsweise die Elektrodose 30 aus den Fig. 2 bis 11, die an der Außenseite 34 des Panels 31 montiert und/oder befestigt sein kann und sich zumindest teilweise durch die Öffnung 102 erstrecken kann. Die Vorrichtung 100 kann mehrere Elektrodosen 30 aufweisen, die an der Außenseite 34 des Panels 31 befestigt sein können.

Die Vorrichtung 100 kann zusätzlich mindestens eine elektrische Leitung 104, vorzugsweise mehrere elektrische Leitungen 104, aufweisen, die mit der jeweiligen Elektrodose 30 verbunden und/oder verbindbar ist. Die elektrische Leitung 104 kann zumindest teilweise entlang der Außenseite 34 des Panels 31 verlaufen.

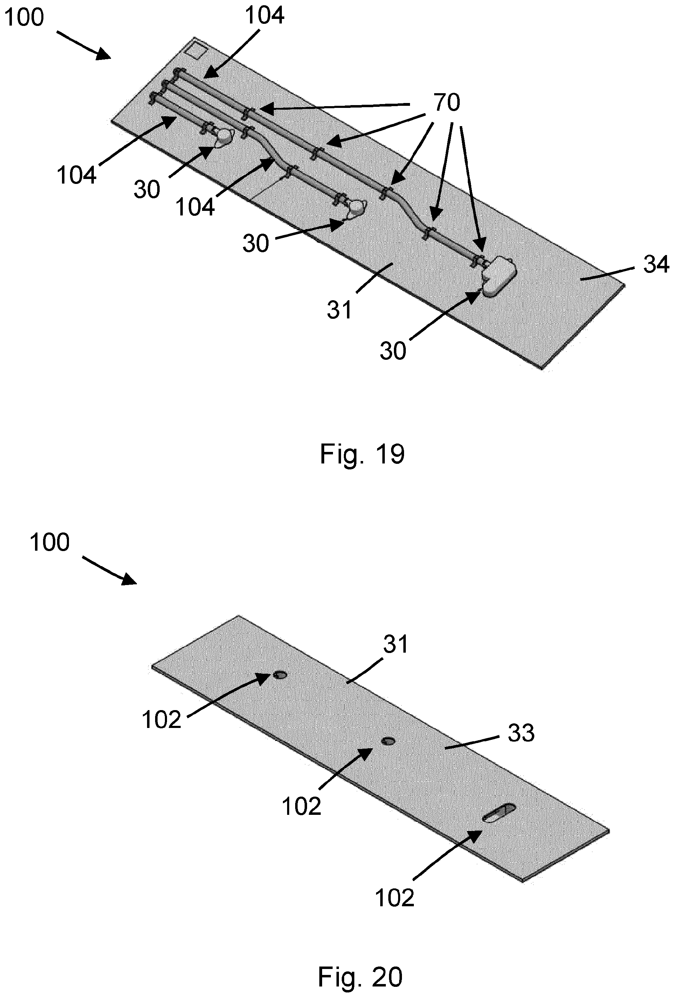

Die Vorrichtung 100 kann mindestens ein Fixierelement aufweisen, vorzugsweise das Fixierelement 70 aus den Fig. 12 bis 16, das dazu eingerichtet sein kann, die elektrische Leitung 104 an der Außenseite 34 des Panels 31 zu fixieren. Die Vorrichtung 100 kann mehrere Fixierelemente 70 aufweisen, wie in Fig. 17 und 19 dargestellt, um mehrere elektrische Leitungen 104 und/oder um mindestens eine elektrische Leitung 104 an mehreren Stellen bzw. Abschnitten entlang der jeweiligen elektrischen Leitung 104 an dem Panel 31 zu fixieren.

## Patentansprüche

1. Eine Elektrodose (30), die dazu eingerichtet ist, an einem Panel (31) befestigt zu werden, wobei das Panel (31) dazu eingerichtet ist, als Teil einer Wand (32) und/oder einer Decke (32) eines Raums (37) eines Gebäudes montiert zu werden, wobei das Panel (31) eine Innenseite (33), die dem Raum (37) zugewandt ist, und eine Außenseite (34), die von dem Raum (37) abgewandt ist, aufweist, bezogen auf einen montierten Zustand des Panels (31), wobei die Elektrodose (30) aufweist:
mindestens eine Befestigungsvorrichtung (38), die dazu eingerichtet ist, die Elektrodose (30) an der Außenseite (34) des Panels (31) zu befestigen; und
mindestens eine Greifschnittstelle (52), die dazu eingerichtet ist, durch mindestens einen Handhabungsroboter (53) in Eingriffsverbindung zu gelangen, um die Elektrodose (30) mittels des Handhabungsroboters (53) an dem Panel (31) zu positionieren.

2. Die Elektrodose (30) nach Anspruch 1, zusätzlich aufweisend mindestens ein Anschlusselement (58), das dazu eingerichtet ist, mit mindestens einer elektrischen Leitung (59) verbunden zu werden, um die Elektrodose (30) mit der elektrischen Leitung (59) zu verbinden, wobei das Anschlusselement (58) mindestens eine Aussparung (60) aufweist, die dazu eingerichtet ist, zumindest einen Abschnitt eines Handhabungsroboters (61), der die elektrische Leitung (59) greift, zumindest teilweise aufzunehmen und/oder zumindest einen Abschnitt eines Handhabungsroboters (61), der die elektrische Leitung (59) greift, durch die Aussparung (60) passieren zu lassen, um die elektrische Leitung (59) mittels des Handhabungsroboters (61) mit dem Anschlusselement (58) zu verbinden.

3. Die Elektrodose (30) nach Anspruch 2, wobei das Anschlusselement (58) mindestens zwei Aussparungen (60) aufweist, die an gegenüberliegenden Seiten des Anschlusselements (58) angeordnet sind.

4. Die Elektrodose (30) nach Anspruch 2 oder 3, wobei:
sich das Anschlusselement (58), insbesondere eine Längsachse (LA) des Anschlusselements (58), zumindest bereichsweise entlang der Außenseite (34) des Panels (31) und/oder im Wesentlichen parallel zur Außenseite (34) des Panels (31) erstreckt;
und/oder
das Anschlusselement (58) dazu eingerichtet ist, dass die elektrische Leitung (59) entlang einer Richtung, die sich entlang der Außenseite (34) des Panels (31) und/oder im Wesentlichen parallel zur Außenseite (34) des Panels (31) erstreckt, mit dem Anschlusselement (58) verbunden wird.

5. Ein Fixierelement (70), das dazu eingerichtet ist, mindestens eine elektrische Leitung (72) an einem Panel (31) zu fixieren, wobei das Fixierelement (70) aufweist:
mindestens einen Befestigungsabschnitt (74), der dazu eingerichtet, das Fixierelement (70) an dem Panel (31) zu befestigen;
mindestens einen Aufnahmeabschnitt (76), der dazu eingerichtet ist, die elektrische Leitung (72) zumindest teilweise aufzunehmen; und
mindestens ein Greifmerkmal (80), das dazu eingerichtet ist, durch mindestens einen Handhabungsroboter (82) in Eingriffsverbindung zu gelangen, um das Fixierelement an dem Panel (31) zu positionieren.

6. Das Fixierelement (70) nach Anspruch 11, wobei:
das Greifmerkmal (80) eine im Wesentlichen ebene Fläche ist;
oder
das Greifmerkmal (80) zumindest eine im Wesentlichen ebene Fläche aufweist.

7. Das Fixierelement nach Anspruch 11 oder 12, wobei der Befestigungsabschnitt (74):
an einem ersten Ende (84) des Fixierelements (70) angeordnet ist und das Greifmerkmal (80) an einem dem ersten Ende (84) gegenüberliegenden zweiten Ende (86) des Fixierelements (70) angeordnet ist;
und/oder
an einem von dem Greifmerkmal (80) distalen Ende (84) und/oder distalen Abschnitt (84) des Fixierelements (70) angeordnet ist.

8. Eine Vorrichtung (100), die dazu eingerichtet ist, als Teil einer Wand (32) und/oder einer Decke (32) eines Raums (37) eines Gebäudes montiert zu werden, wobei die Vorrichtung (100) aufweist:
ein Panel (31), welches eine Innenseite (33), die dem Raum (37) zugewandt ist, und eine Außenseite (34), die von dem Raum (37) abgewandt ist, aufweist, bezogen auf einen montierten Zustand des Panels (31);
eine Öffnung (102), die in dem Panel (31) definiert ist, und
mindestens eine Elektrodose (30), die an der Außenseite (34) des Panels (31) montiert und/oder befestigt ist und sich zumindest teilweise durch die Öffnung (102) erstreckt.

9. Ein Werkzeug (55), das dazu eingerichtet ist, an einer Werkzeugaufnahme (57) eines Handhabungsroboters (53) montiert zu werden, wobei das Werkzeug (55) dazu eingerichtet ist, eine Elektrodose (30), vorzugsweise eine Elektrodose (30) nach einem der Ansprüche 1 bis 10, an mindestens einer Greifschnittstelle (52) der Elektrodose (30) zu greifen und die Elektrodose (30) an einem Panel (31) zu positionieren, vorzugsweise wobei das Panel (31) dazu eingerichtet ist, als Teil einer Wand (32) und/oder einer Decke (32) eines Raums (37) eines Gebäudes montiert zu werden.

10. Ein Verfahren zum Zusammenbauen einer Vorrichtung (100), die dazu eingerichtet ist, als Teil einer Wand (32) und/oder einer Decke (32) eines Raums (37) eines Gebäudes montiert zu werden, wobei das Verfahren aufweist:
(a) Bereitstellen eines Panels (31), welches eine Innenseite (33), die dem Raum (37) zugewandt ist, und eine Außenseite (34), die von dem Raum (37) abgewandt ist, aufweist, bezogen auf einen montierten Zustand des Panels (31);
(b) Greifen mindestens einer Elektrodose (30) an mindestens einer Greifschnittstelle (52) mittels mindestens eines Handhabungsroboters (53);
(c) Positionieren der Elektrodose (30) mittels des Handhabungsroboters (53) an der Außenseite (34) des Panels (31);
(d) Befestigen der Elektrodose (30) an der Außenseite (34) des Panels (31).

## Geänderte Patentansprüche

### Geänderte Patentansprüche gemäss Regel 137(2) EPÜ.

1. Eine Elektrodose (30), die dazu eingerichtet ist, an einem Panel (31) befestigt zu werden, wobei das Panel (31) dazu eingerichtet ist, als Teil einer Wand (32) und/oder einer Decke (32) eines Raums (37) eines Gebäudes montiert zu werden, wobei das Panel (31) eine Innenseite (33), die dem Raum (37) zugewandt ist, und eine Außenseite (34), die von dem Raum (37) abgewandt ist, aufweist, bezogen auf einen montierten Zustand des Panels (31), wobei die Elektrodose (30) aufweist:
mindestens eine Befestigungsvorrichtung (38), die dazu eingerichtet ist, die Elektrodose (30) an der Außenseite (34) des Panels (31) zu befestigen; und
mindestens eine Greifschnittstelle (52), die dazu eingerichtet ist, durch mindestens einen Handhabungsroboter (53) in Eingriffsverbindung zu gelangen, um die Elektrodose (30) mittels des Handhabungsroboters (53) an dem Panel (31) zu positionieren.

2. Die Elektrodose (30) nach Anspruch 1, zusätzlich aufweisend mindestens ein Anschlusselement (58), das dazu eingerichtet ist, mit mindestens einer elektrischen Leitung (59) verbunden zu werden, um die Elektrodose (30) mit der elektrischen Leitung (59) zu verbinden, wobei das Anschlusselement (58) mindestens eine Aussparung (60) aufweist, die dazu eingerichtet ist, zumindest einen Abschnitt eines Handhabungsroboters (61), der die elektrische Leitung (59) greift, zumindest teilweise aufzunehmen und/oder zumindest einen Abschnitt eines Handhabungsroboters (61), der die elektrische Leitung (59) greift, durch die Aussparung (60) passieren zu lassen, um die elektrische Leitung (59) mittels des Handhabungsroboters (61) mit dem Anschlusselement (58) zu verbinden.

3. Die Elektrodose (30) nach Anspruch 2, wobei das Anschlusselement (58) mindestens zwei Aussparungen (60) aufweist, die an gegenüberliegenden Seiten des Anschlusselements (58) angeordnet sind.

4. Die Elektrodose (30) nach Anspruch 2 oder 3, wobei:
sich das Anschlusselement (58), insbesondere eine Längsachse (LA) des Anschlusselements (58), zumindest bereichsweise entlang der Außenseite (34) des Panels (31) und/oder im Wesentlichen parallel zur Außenseite (34) des Panels (31) erstreckt;
und/oder
das Anschlusselement (58) dazu eingerichtet ist, dass die elektrische Leitung (59) entlang einer Richtung, die sich entlang der Außenseite (34) des Panels (31) und/oder im Wesentlichen parallel zur Außenseite (34) des Panels (31) erstreckt, mit dem Anschlusselement (58) verbunden wird.

5. Ein Fixierelement (70), das dazu eingerichtet ist, mindestens eine elektrische Leitung (72) an einem Panel (31) zu fixieren, wobei das Fixierelement (70) aufweist:
mindestens einen Befestigungsabschnitt (74), der dazu eingerichtet, das Fixierelement (70) an dem Panel (31) zu befestigen;
mindestens einen Aufnahmeabschnitt (76), der dazu eingerichtet ist, die elektrische Leitung (72) zumindest teilweise aufzunehmen; und
mindestens ein Greifmerkmal (80), das dazu eingerichtet ist, durch mindestens einen Handhabungsroboter (82) in Eingriffsverbindung zu gelangen, um das Fixierelement an dem Panel (31) zu positionieren.

6. Das Fixierelement (70) nach Anspruch 5, wobei:
das Greifmerkmal (80) eine im Wesentlichen ebene Fläche ist;
oder
das Greifmerkmal (80) zumindest eine im Wesentlichen ebene Fläche aufweist.

7. Das Fixierelement nach Anspruch 5 oder 6, wobei der Befestigungsabschnitt (74):
an einem ersten Ende (84) des Fixierelements (70) angeordnet ist und das Greifmerkmal (80) an einem dem ersten Ende (84) gegenüberliegenden zweiten Ende (86) des Fixierelements (70) angeordnet ist;
und/oder
an einem von dem Greifmerkmal (80) distalen Ende (84) und/oder distalen Abschnitt (84) des Fixierelements (70) angeordnet ist.

8. Eine Vorrichtung (100), die dazu eingerichtet ist, als Teil einer Wand (32) und/oder einer Decke (32) eines Raums (37) eines Gebäudes montiert zu werden, wobei die Vorrichtung (100) aufweist:
ein Panel (31), welches eine Innenseite (33), die dem Raum (37) zugewandt ist, und eine Außenseite (34), die von dem Raum (37) abgewandt ist, aufweist, bezogen auf einen montierten Zustand des Panels (31);
eine Öffnung (102), die in dem Panel (31) definiert ist, und
mindestens eine Elektrodose (30), die an der Außenseite (34) des Panels (31) montiert und/oder befestigt ist und sich zumindest teilweise durch die Öffnung (102) erstreckt.

9. Ein Werkzeug (55), das dazu eingerichtet ist, an einer Werkzeugaufnahme (57) eines Handhabungsroboters (53) montiert zu werden, wobei das Werkzeug (55) dazu eingerichtet ist, eine Elektrodose (30) nach einem der Ansprüche 1 bis 4, an mindestens einer Greifschnittstelle (52) der Elektrodose (30) zu greifen und die Elektrodose (30) an einem Panel (31) zu positionieren, vorzugsweise wobei das Panel (31) dazu eingerichtet ist, als Teil einer Wand (32) und/oder einer Decke (32) eines Raums (37) eines Gebäudes montiert zu werden.

10. Ein Verfahren zum Zusammenbauen einer Vorrichtung (100), die dazu eingerichtet ist, als Teil einer Wand (32) und/oder einer Decke (32) eines Raums (37) eines Gebäudes montiert zu werden, wobei das Verfahren aufweist:
(a) Bereitstellen eines Panels (31), welches eine Innenseite (33), die dem Raum (37) zugewandt ist, und eine Außenseite (34), die von dem Raum (37) abgewandt ist, aufweist, bezogen auf einen montierten Zustand des Panels (31);
(b) Greifen mindestens einer Elektrodose (30) an mindestens einer Greifschnittstelle (52) mittels mindestens eines Handhabungsroboters (53);
(c) Positionieren der Elektrodose (30) mittels des Handhabungsroboters (53) an der Außenseite (34) des Panels (31);
(d) Befestigen der Elektrodose (30) an der Außenseite (34) des Panels (31).
